(19) Europäisches Patentamt European Patent Office Office européen des brevets

(11) **EP 4 642 106 A1**

(12) **EUROPEAN PATENT APPLICATION**
published in accordance with Art. 153(4) EPC

(43) Date of publication:
**29.10.2025 Bulletin 2025/44**

(21) Application number: **24744817.8**

(22) Date of filing: **12.01.2024**

(51) International Patent Classification (IPC):
*H04W 52/02* (2009.01)   *H04W 56/00* (2009.01)
*H04W 8/00* (2009.01)   *H04L 67/51* (2022.01)
*H04W 4/06* (2009.01)   *H04W 4/80* (2018.01)
*H04W 84/12* (2009.01)

(52) Cooperative Patent Classification (CPC):
**H04L 67/51; H04W 4/06; H04W 4/80; H04W 8/00;
H04W 52/02; H04W 56/00; H04W 84/12;
Y02D 30/70**

(86) International application number:
**PCT/KR2024/000638**

(87) International publication number:
**WO 2024/155036 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2023 KR 20230008224**

(71) Applicant: **Samsung Electronics Co., Ltd.
Suwon-si, Gyeonggi-do 16677 (KR)**

(72) Inventors:
• **OH, Hyunseob
  Suwon-si Gyeonggi-do 16677 (KR)**

• **BHATTACHARYA, Sagnik
  Suwon-si Gyeonggi-do 16677 (KR)**
• **PARK, Junha
  Suwon-si Gyeonggi-do 16677 (KR)**
• **SEO, Seungbeom
  Suwon-si Gyeonggi-do 16677 (KR)**
• **CHOI, Junyoung
  Suwon-si Gyeonggi-do 16677 (KR)**
• **HAN, Sehee
  Suwon-si Gyeonggi-do 16677 (KR)**

(74) Representative: **HGF
HGF Limited
1 City Walk
Leeds LS11 9DX (GB)**

(54) **METHOD AND APPARATUS FOR COMMUNICATING DISCOVERY AND DATA ON BASIS OF WAKE-UP SIGNAL IN WIRELESS COMMUNICATION SYSTEM**

(57)   A method performed by a first electronic device in a wireless communication system, according to the present disclosure, may comprise the steps of: transmitting an advertisement message to at least one second electronic device; transmitting a wake-up packet to the at least one second electronic device; on the basis of the wake-up packet, transmitting a service discovery frame to the at least one second electronic device; transmitting a synchronization beacon to the at least one second electronic device; and performing communication with the at least one second electronic device.

EP 4 642 106 A1

FIG. 5

## Description

[Technical Field]

The disclosure relates to a method and device for performing short-range communication according to a neighboring awareness networking (NAN) or WiFi-aware specification in a wireless communication system.

[Background Art]

With the proliferation of electronic devices equipped with independent operating systems, various communication platforms for supporting multi-function operation of electronic devices have been proposed. For example, proximity services according to a neighbor awareness networking (NAN) specification or WiFi-aware specification based on short-range wireless communication technology support low-power and highspeed data transmission and reception between electronic devices mutually close to each other. The proximity service according to the NAN specification may configure a set of electronic devices, which is referred to as a cluster. A NAN protocol based on the neighbor awareness networking (NAN) specification among short-range communication networks may be a protocol that synchronizes times at which a message is transmitted or received between an electronic device and another electronic device. Recently, in the Wi-Fi specification, neighbor awareness networking (NAN)-based discovery technology is being developed, and the development of a proximity service using the same is actively being conducted.

[Detailed Description of the Invention]

[Technical Problem]

Conventionally, when performing communication with a device that is sleeping via short-range wireless communication, an access point (AP) device may wake up the device based on a wake-up signal and perform communication.

However, in communication between mobile devices which are not APs, the procedure is not established, and discovery signal-based synchronization and service discovery need to be performed for communication, and thus a delay time is long.

Therefore, the disclosure may propose a method that applies a wake-up signal to inter-mobile device communication, shortens a service discovery time, and maintains a sleep state while communication is not performed, so as to reduce power consumption.

[Technical Solution]

A method according to an embodiment of the disclosure may include an operation of transmitting an advertisement message to at least one second electronic device, an operation of transmitting a wake-up packet to the at least one second electronic device, an operation of transmitting, based on the wake-up packet, a service discovery frame to the at least one second electronic device, an operation of transmitting a synchronization beacon to the at least one second electronic device, and an operation of performing communication with the at least one second electronic device.

A method according to an embodiment of the disclosure may include an operation of receiving an advertisement message from a first electronic device, an operation of receiving a wake-up packet from the first electronic device, an operation of changing, based on reception of the wake-up packet, a first communication module of the second electronic device to an on state for data packet communication, an operation of receiving a service discovery frame from the first electronic device, an operation of transmitting a synchronization beacon from the first electronic device, and an operation of performing communication with the first electronic device.

[Advantageous Effects]

The method and device according to an embodiment of the disclosure apply a wake-up signal to inter-mobile device communication, shorten a service discovery time, and maintain a sleep state while communication is not performed, so as to reduce power consumption.

[Brief Description of Drawings]

FIG. 1 is a block diagram of an electronic device in a network environment according to an embodiment of the disclosure.
FIG. 2A and FIG. 2B are diagrams illustrating a device that performs a wake-up operation and operation of the device according to an embodiment of the disclosure;
FIG. 3A, FIG. 3B, and FIG. 3C are diagrams illustrating wake-up packet and signal structures according to an embodiment of the disclosure;
FIG. 4A and FIG. 4B are diagrams illustrating structures and operation of devices that perform wake-up operations according to an embodiment of the disclosure;
FIG. 5 is a flowchart illustrating communication performed among a plurality of electronic devices according to an embodiment of the disclosure;
FIG. 6 is a diagram illustrating time scheduling of an electronic device according to an embodiment of the disclosure;
FIG. 7 is a flowchart illustrating wake-up and communication performed among a plurality of electronic devices according to an embodiment of the disclosure;

FIG. 8A, FIG. 8B, FIG. 8C, FIG. 8D, and FIG. 8E are diagrams illustrating wake-up packet structures according to an embodiment of the disclosure;

FIG. 9 is a flowchart illustrating a method of adjusting a synchronization period and a service discovery period based on a wake-up packet according to an embodiment of the disclosure;

FIG. 10 is a diagram illustrating a structure of an electronic device according to an embodiment of the disclosure;

FIG. 11 is a diagram illustrating a structure of a transceiver according to embodiments of the disclosure;

FIGS. 12A to 12C are diagrams illustrating a process of triggering a Wi-Fi interface via intra-electronic device signaling according to embodiments of the disclosure;

FIG. 13A and FIG. 13B are diagrams illustrating a device that performs a wake-up operation and operation of the device according to an embodiment of the disclosure;

FIG. 14A and FIG. 14B are diagrams illustrating a device that performs a wake-up operation and operation of the device according to an embodiment of the disclosure;

FIG. 15A and FIG. 15B are diagrams illustrating a device that performs a wake-up operation and operation of the device according to an embodiment of the disclosure;

FIG. 16 is a diagram illustrating a change of a state of an electronic device according to an embodiment of the disclosure;

FIG. 17 is a flowchart illustrating wake-up and communication performed among a plurality of electronic devices according to an embodiment of the disclosure;

FIG. 18A, FIG. 18B, and FIG. 18C are diagrams illustrating a wake-up procedure and a structure of a wake-up packet according to an embodiment of the disclosure;

FIG. 19 is a flowchart illustrating a method of adjusting a synchronization period and a service discovery period based on a wake-up packet according to an embodiment of the disclosure.

[Mode for Carrying out the Invention]

Hereinafter, embodiments of the disclosure will be described in detail in conjunction with the accompanying drawings.

In describing the embodiments of the disclosure, a detailed description of known functions or configurations will be omitted when it is determined that the description may make the subject matter of the disclosure unnecessarily unclear. Also, the terms which will be described below are terms defined in consideration of the functions in the disclosure, and may be different according to users, intentions of the users, or customs.

Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description, some of terms and names defined in the WiFi-aware-based communication standards may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

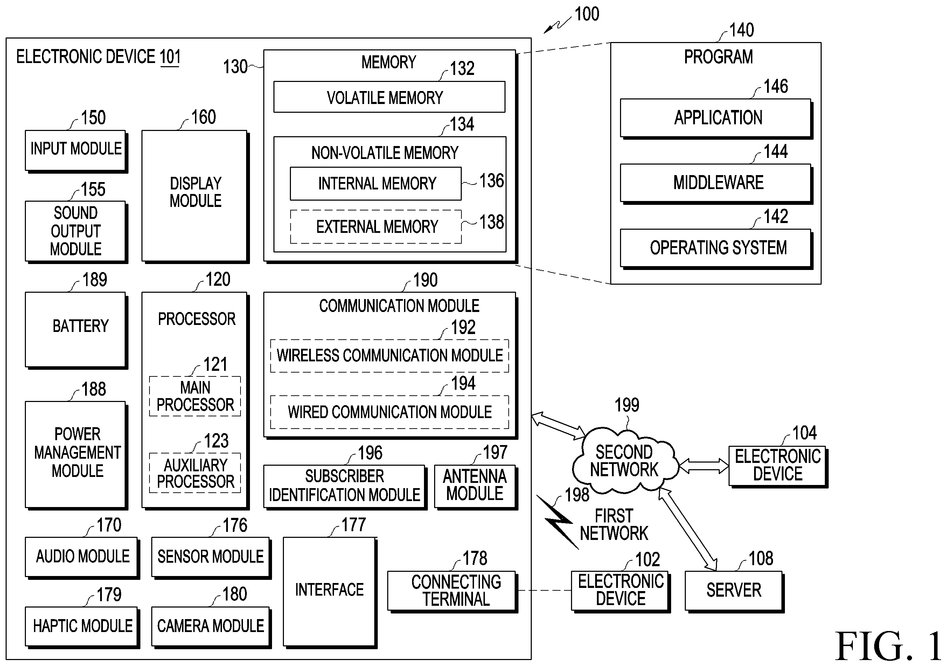

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning.

The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101.

The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

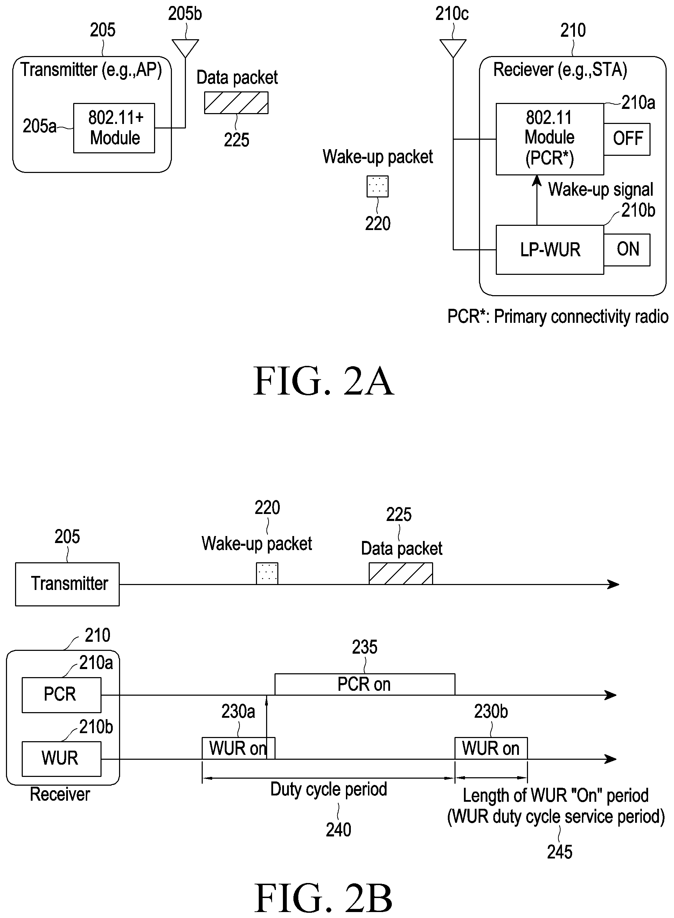

FIG. 2A and FIG. 2B are diagrams illustrating a device that performs a wake-up operation and operation of the device according to an embodiment of the disclosure.

FIG. 2A illustrates structures of devices that perform communication using a wake-up signal. FIG. 2B illustrates operation of devices that perform communication using a wake-up signal.

A first electronic device 205 of FIG. 2A may be an electronic device including an AP. A second electronic device 210 of FIG. 2A may be a mobile electronic device, which is movable. The first electronic device 205 and the second electronic device 210 may be devices that are capable of performing short-range communication according to a neighboring awareness networking (NAN) or WiFi-aware specification.

Referring to FIG. 2A, the first electronic device 205 may include a first communication module 205a and an antenna 205b. The first communication module may be a communication module capable of transmitting or receiving both a wake-up packet 220 and a data packet 225. For example, the first communication module may include a module that supports the IEEE standard 802.11. The second electronic device 210 may include a second communication module 210a, a third communication module 210b, and an antenna 210c. The second communication module 210a may be a communication module capable of transmitting or receiving only the data packet 225. For example, the second communication module may include a module that supports the IEEE standard 802.11. The second communication module may be referred to as a primary connectivity radio (PCR). The third communication module 210b may be a module capable of receiving only the wake-up packet 220. For example, the third communication module 210b may include a low power wake-up radio (LP-WUR) module. The second communication module 210a and the third communication module 210b may communicate with another device by sharing the one antenna 210c or using respective antennas. The second communication module 210a and the third communication module 210b may be capable of performing communication, and the third communication module 210b, upon reception of a wake-up packet from the outside, may transmit a wake-up signal to the second communication module 210a. While not performing communication with an external device, the second electronic device 210 may maintain the second communication module 210a in the OFF state and may maintain the third communication module 210b in the ON state. In the second electronic device 210, when the third communication module 210b receives a wake-up packet from an external device, the third communication module 210b transmits a wake-up signal to the second communication module 210a and changes the second communication module 210a to the ON state, so as to perform data communication. The second communication module 210a changed to the ON state may receive the data packet 225.

Referring to FIG. 2B, the first electronic device 205 may transmit the wake-up packet 220 first, and then may transmit the data packet 225. Although the second electronic device 210 includes the second communication module 210a and the third communication module 210b, the second electronic device 210 may maintain the second communication module 210a in the OFF state and maintain the third communication module 210b in the ON state, while not performing communication with the outside. During a WUR ON period 230a in which the third communication module 210b is in the ON state, the third communication module may receive the wake-up packet 220. The third communication module 210b that receives the wake-up packet 220 may transmit a wake-up signal 250 to the second communication module 210a. The second communication module 210a that receives the wake-up signal may change to the ON state in order to receive the data packet 225, and may receive the data packet during a PCR ON period 235. When the PCR ON period 235 elapses, the second communication module 210a may be changed to the OFF state. According to an embodiment, a period 245 of the WUR ON 230a or 230b in which the third communication module 210b is in the ON state may be arbitrarily configured. For example, the period 245 of WUR ON 230a or 230b may be a length of WUR On period. In addition, the WUR ON 230a or 230b in which the third communication module 210b is in the ON state may be configured to be periodical. A period from a start of the first WUR ON period 230a to a start of the second WUR ON period 230b may be determined as a duty cycle period 240.

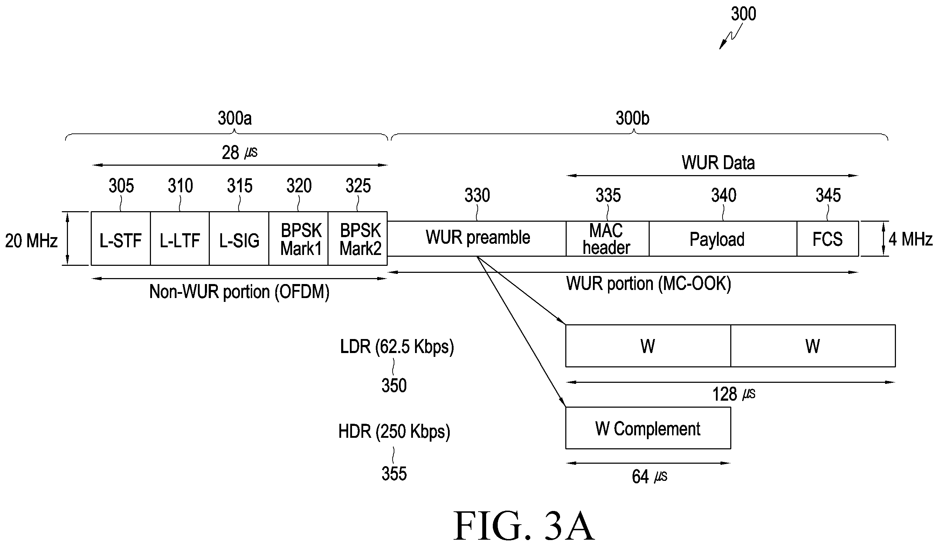

FIG. 3A to FIG. 3C are diagrams illustrating wake-up packet and signal structures according to an embodiment of the disclosure.

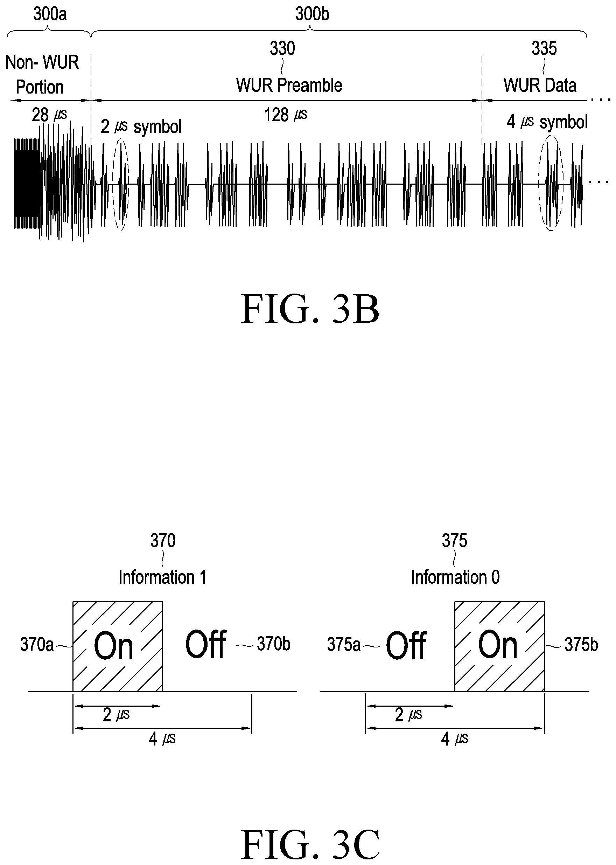

FIG. 3A may represent a structure of a wake-up packet according to an embodiment of the disclosure. FIG. 3B may represent a form of a wake-up signal in a time domain according to an embodiment of the disclosure. FIG. 3C may represent an on-off keying (OOK) modulation scheme according to an embodiment of the disclosure.

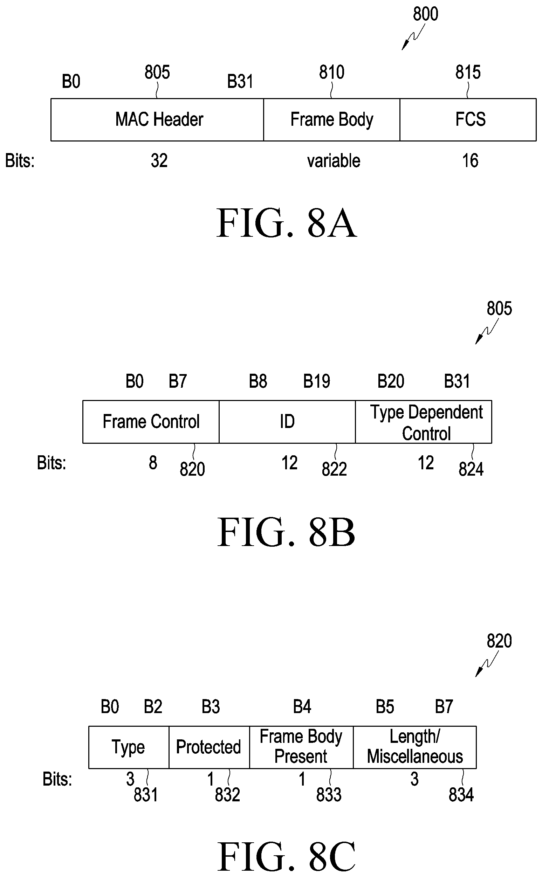

Referring to FIG. 3A, a wake-up packet 300 may be the same as the wake-up packet 220 in FIGS. 2A and 2B. The wake-up packet 300 may include a non-WUR portion 300a and a WUR portion 300b. The non-WUR portion 300a may be information indicating that the corresponding packet is a packet for Wi-Fi communication. The non-WUR portion 300a may be configured according to an orthogonal frequency division multiplexing (OFDM) scheme. The non-WUR portion 300a may have a frequency bandwidth of 20MHz. A length of the non-WUR portion 300a may be 28μs (micro second). The non-WUR portion 300a may include a legacy short training friend (L-STF) 305, a legacy long training field (L-LTF) 310, a legacy signal (L-SIG) field 315, a binary phase shift keying (BPSK) mark 1 field 320, and a BPSK mark 2 field 325. The BPSK mark 1 320 and BPSK mark 2 325 may be fields for repeating the L-SIG 315. The WUR portion 300b may be information indicating a wake-up signal. The WUR portion 300b may be configured according to a MC-OOK scheme. The OOK scheme will be described by referring to FIG. 3C. The WUR portion 300b may have a bandwidth of 4MHz. The WUR portion 300b may include a preamble field 330, a MAC header field 335, a payload field 340, and a frame check sequence (FCS) field 345. The MAC header field 335, the payload field 340, the FCS field 345 may be collectively referred to as a WUR data portion. The preamble field 330 may be structured based on a data rate. In the case of a low data rate (LDR) 350 in which a data rate is 62.5Kbps, the preamble field may be structured to include two W-sequences. In the case of a high data rate (HDR) in which a data rate is 250Kbps, the preamble field may be structured to include a single W complement sequence 355. One W-sequence 350a or 350b may be a 32-bit sequence and may have a length of 64μs. Therefore, the LDR 350 may have a total length of 128us, and the HDR may have a length of 64μs. For example, the W-sequence 350a or 350b may have a structure of W = [1, 0, 1, 0, 0, 1, 0, 0, 1, 0, 1, 1, 1, 0, 1, 1, 0, 0, 0, 1, 0, 1, 1, 1, 0, 0, 1, 1, 1, 0, 0, 0] as a digital signal. The WUR data portion of the WUR portion 300b will be described in detail by referring to FIGS. 8A to 8E.

FIG. 3B illustrates a wake-up signal in an analog form. The non-WUR portion 300a may have a length of 28μs and may have a larger bandwidth than the WUR portion 300b. FIG. 3B illustrates a wake-up signal in the case of an LDR, and the WUR portion 300b may have a narrower bandwidth than the WUR portion 300b. In the WUR portion 300b, the WUR preamble field 330 may have a length of 128μs. Here, a single symbol has a length of 2μs, and a portion with a digital signal of 1 has an analog signal, and a portion with a digital signal of 0 has no analog signal. A portion of the WUR data portion 335 is omitted and a single symbol may have a length of 4μs.

FIG. 3C illustrates an on-off keying (OOK) demodulation scheme The WUR portion 300b of FIG. 3A and FIG. 3B may be configured according to an OOK demodulation scheme. In the WUR portion 300b, a digital signal 1 370 indicating ON and a digital signal 0 375 indicating OFF may exist. The digital signal 1370 may include an on portion 370a and an OFF portion 370b. Each of the ON portion 370a and the OFF portion 370b may have a length of 2μs, and two portions may collectively indicate one information. The digital signal 1 370 may be configured to include the OFF portion 370b after the ON portion 370a. Therefore, each of the digital signal 1 370 and the digital signal 2 375 may be configured to have a length of 4 μs. The digital signal 2 375 may have the same configuration as the digital signal 1 370, and in this instance, the digital signal 2 375 may be configured to include an ON portion 375b after an OFF portion 375a.

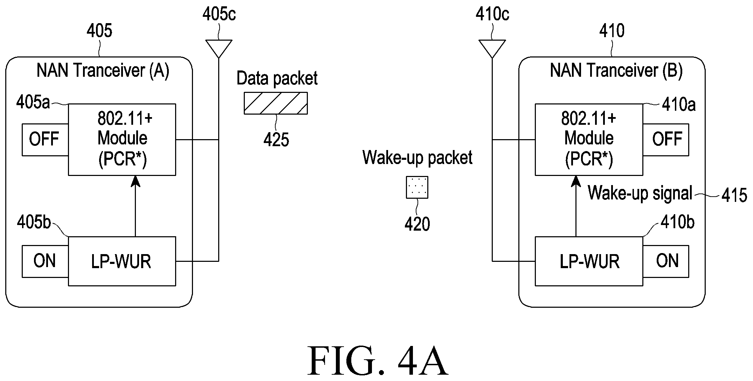

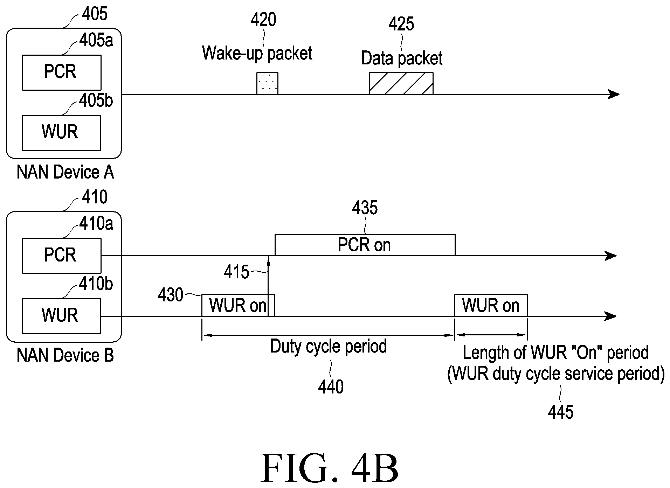

FIG. 4A and FIG. 4B are diagrams illustrating structures and operation of devices that perform wake-up operations according to an embodiment of the disclosure.

FIG. 4A illustrates structures of devices that perform communication using a wake-up signal. FIG. 4B illustrates operations of devices that perform communication using a wake-up signal.

A first electronic device 405 of FIG. 4A may be a mobile electronic device, which is movable. A second electronic device 410 of FIG. 4A may be a mobile electronic device, which is movable. The first electronic device 405 and the second electronic device 410 may be devices that are capable of performing short-range communication according to a neighboring awareness networking (NAN) or WiFi-aware specification.

Referring to FIG. 4A, the first electronic device 405 may include a first communication module 405a, a second communication module 405b, and an antenna 405c. The first communication module may be a communication module capable of transmitting or receiving both a wake-up packet 420 and a data packet 425. For example, the first communication module 405a may include a module that supports the IEEE standard 802.11. The second communication module 405b may be a module capable of receiving only the wake-up packet 420. For example, the second communication module 405b may include a low power wake-up radio (LP-WUR) module. The second electronic device 410 may include a first communication module 410a, a second communication module 410b, and an antenna 410c. The first communication module 410a may be a communication module capable of transmitting or receiving both the wake-up packet 420 and the data packet 425. Here, the first communication module may be referred to as a primary connectivity radio (PCR). The second communication module 410b may be a module capable of receiving only the wake-up packet 420. For example, the second communication module 410b may include a low power wake-up radio (LP-WUR) module. The first communication module 405a or 410a and the second communication module 405b or 410b in the first electronic device 405 and the second electronic device 410 may perform communication with another device by sharing one antenna 405 or 410c or by using respective antennas. The first communication module 405a or 410a and the second communication module 405b or 410b may be capable of performing communication with each other, and the second communication module 405b or 410b, upon reception of a wake-up packet from the outside, may transmit a wake-up signal to the first communication module 405a or 410a. While not performing communication with an external device, the second electronic device 410 may maintain the first communication module 410a in the OFF state and may maintain only the second communication module 410b in the ON state. In the second electronic device 410, when the second communication module 410b receives a wake-up packet from an external device, the second communication module 410b transmits a wake-up signal 415 to the first communication module 410a and changes the first communication module 410a to the ON state, so as to perform data communication (data packet transmission or reception). The first communication module 410a changed to the ON state may receive the data packet 425.

Referring to FIG. 4B, the first electronic device 405 may transmit the wake-up packet 420 first by using the first communication module 405a, and then may transmit the data packet 425. Although the second electronic device 410 includes the first communication module 410a and the second communication module 410b, the second electronic device 410 may maintain the first communication module 110a in the OFF state and maintain only the second communication module 410b in the ON state while not performing communication with the outside. During a WUR ON period 430 in which the second communication module 410b is in the ON state, the second communication module may receive the wake-up packet 420. The second communication module 410b that receives the wake-up packet 420 may transmit the wake-up signal 415 to the first communication module 410a. The first communication module 410a that receives the wake-up signal 415 may change to the ON state in order to receive the data packet 425, and may receive the data packet during a PCR ON period 435. When the PCR ON period 435 elapses, the first communication module 410a may be changed to the OFF state. According to an embodiment, a period 445 of the WUR ON 430 in which the second communication module 410b is in the ON state may be arbitrarily configured. For example, the period 445 of WUR ON 430 may be a length of WUR "On" period. In addition, the WUR ON 430 in which the second communication module 410b is in the ON state may be configured to be on periodically. A period from a start of the first WUR ON period 430 to a start of the second WUR ON period may be determined as a duty cycle period 440.

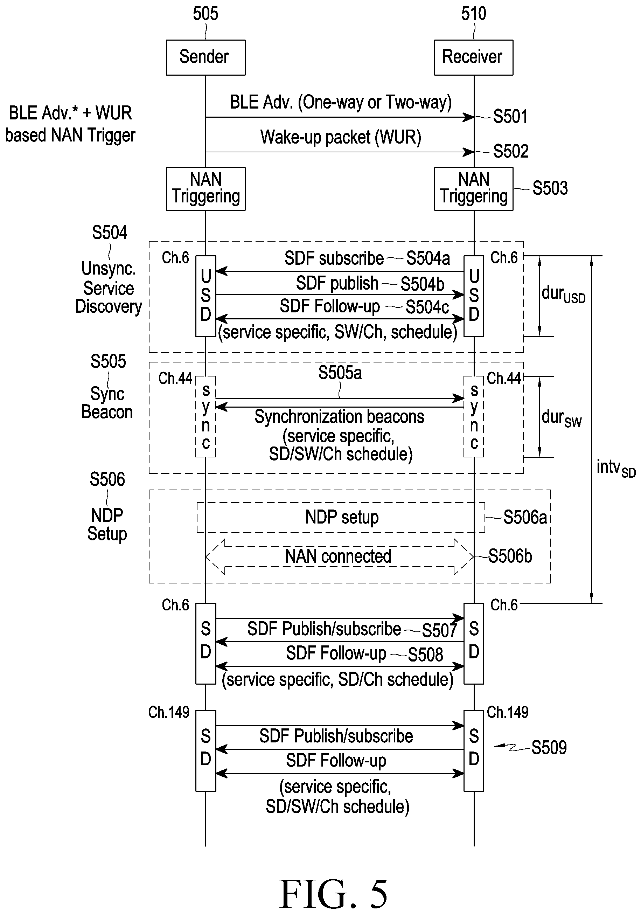

FIG. 5 is a flowchart illustrating communication performed among a plurality of electronic devices according to an embodiment of the disclosure.

FIG. 5 is a flowchart illustrating a wake-up operation and a series of operations of discovery communication performed among a plurality of electronic devices. Two electronic devices 505 and 510 are included in FIG. 5, but the disclosure is not limited thereto and a plurality of electronic devices may be included.

The electronic devices 505 and 510 of FIG. 5 may be electronic devices same as a first electronic device and a second electronic device described in FIGS. 4A and 4B.

The first electronic device 505 of FIG. 5 may be a mobile electronic device, which is movable. The second electronic device 510 of FIG. 5 may be a mobile electronic device, which is movable. The first electronic device 505 and the second electronic device 510 may be devices that are capable of performing short-range communication according to a neighboring awareness networking (NAN) or WiFi-aware specification.

FIG. 5 discloses a method of starting a NAN service and performing service discovery based on a wake-up radio between the first electronic device 505 and the second electronic device 510. The first electronic device 505 may be a sender electronic device that performs wake-up and discovery, and the second electronic device 510 may be a receiver device that is woken up from sleep.

Referring to FIG. 5, the first electronic device 505 may transmit or broadcast an advertisement message to the second electronic device 510 in operation S501. For example, the advertisement message may be a Bluetooth low energy (BLE) advertisement message. According to an embodiment, the advertisement message may be based on an one-way or two-way scheme. The first electronic device 505 may transmit a wake-up packet that has been described in FIG. 1 to FIG. 4B of the disclosure, in order to wake up the second electronic device 510 in operation S502. The second electronic device 510 that receives the wake-up packet may wake up, may change a primary communication module to the ON state, and may receive a data packet, as illustrated in FIGS. 4A and 4B. The first electronic device 505 and the second electronic device 510 that transmit and receive a wake-up, may trigger a neighbor awareness networking (NAN) in operation S503.

After performing the wake-up procedure, the second electronic device 510 may perform an unsynchronization service discovery (Unsync. service discovery) procedure with the first electronic device 505 in operation S504. In the unsynchronization service discovery procedure, the second electronic device 510 may transmit an SDF subscribe message to the first electronic device 505 in order to perform ACK with respect to the reception of the BLE advertisement message of operation S501 and the reception of the wake-up packet of operation S502, in operation S504a. SDF subscribe and publish messages may include device information (e.g., device name, ID, or phone number information) or user information (user name, profile information, or account information). For example, the unsynchronization service discovery procedure may be performed in channel 6. When the first electronic device 505 receives the SDF subscribe message, the first electronic device 505 may transmit, to the second electronic device 510, an SDF publish message in the same channel in operation S504b.

When the second electronic device 505 receives the SDF publish message, the second electronic device 505 may perform SDF follow-up with the first electronic device 505 in operation S504c. While the SDF follow-up is performed, the first electronic device 505 and the second electronic device 510 may transmit or receive service-specific information, (subsequent) SDP or DW timing information, channel information, vendor information, electronic device's capacity information, or scheduling information.

After finishing the service discovery procedure in operation S504, the first electronic device 505 and the second electronic device 510 may perform a synchronization beacon procedure in operation S505. In the synchronization beacon procedure of operation S505, the first electronic device 505 and the second electronic device 510 may transmit and receive a synchronization beacon in operation S505a. The synchronization beacon may include scheduling information, information (e.g., application information, service state information) related to a service or data to be transmitted, NAN capability information, or capability information of NAN data path scheduling. According to an embodiment, information transmitted or received in the SDF follow-up may be equally included in the synchronization beacon, or vice versa. The synchronization beacon procedure in operation S505 may be performed in a channel determined based on information indicated by the SDF follow. For example, the synchronization beacon procedure may be performed in channel 44.

After the synchronization beacon procedure, the first electronic device 505 and the second electronic device 510 may perform a NAN data path (NDP) setup procedure in operation S506. The first electronic device 505 and the second electronic device 510 may perform the NDP setup in operation S506a. The first electronic device 505 and the second electronic device 510 may perform NAN connection after the NDP setup in operation S506b.

The synchronization service discovery procedure in operation S504, the synchronization beacon procedure in operation S505, and the NDP setup procedure in operation S506 are not procedures to be necessarily performed, and only some of them may be performed in various combinations when needed.

After the NDP setup procedure, the first electronic device 505 and the second electronic device 510 may perform a service discovery procedure. The service discovery procedure may be performed similarly to the unsynchronization service discovery procedure of operation S504. The first electronic device 505 may transmit an SDF publish message to the second electronic device 510. The SDF publish message may include device information (e.g., device name, ID, or phone number information) or user information (user name, profile information, or account information). For example, the service discovery procedure may be performed in channel 6. When the second electronic device 510 receives the SDF publish message, the second electronic device 510 may transmit, to the first electronic device 505, an SDF subscribe message in the same channel in operation S507. Upon receiving the SDF subscribe message, the first electronic device 510 may perform SDF follow-up with the second electronic device 510 in operation S508. While the SDF follow-up is performed, the first electronic device 505 and the second electronic device 510 may transmit or receive service-specific information, (subsequent) SDP or DW timing information, channel information, vendor information, electronic device's capacity information, or scheduling information.

The first electronic device 505 and the second electronic device 510 may perform a subsequent service discovery procedure based on channel information determined in the SDF follow-up, in operation S509.

According to an embodiment, in the service discovery procedure and the synchronization beacon procedure of FIG. 5, the scheduling information may include a timing at which a subsequent procedure is to be performed, an operating channel, and a target wake-up time. In addition, wake-up may be scheduled based on a target wake-up time function.

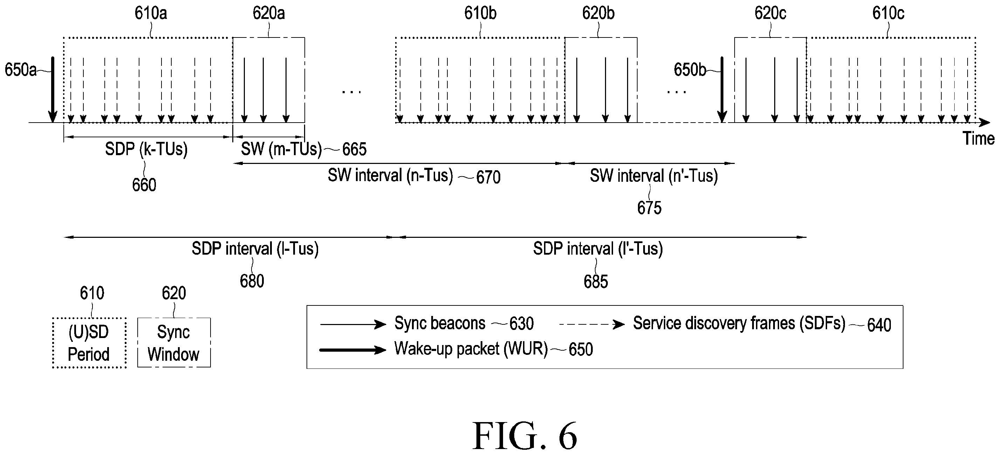

FIG. 6 is a diagram illustrating time scheduling of an electronic device according to an embodiment of the disclosure.

At least one electronic device of FIG. 6 may be an electronic device same as a first electronic device and a second electronic device described in FIGS. 4A to 5.

At least one electronic device of FIG. 6 may be a mobile electronic device, which is movable. The at least one electronic device may be a device capable of performing short-range communication according to a neighboring awareness networking (NAN) or WiFi-aware specification.

Referring to FIG. 6, at least one electronic device (e.g., the electronic device 1000 of FIG. 1 and the first electronic device and the second electronic device described in FIGS. 4A to 5) may transmit a synchronization beacon 630, a service discovery frame (service discovery frames) 640, a wake-up packet (WUR) 650 according to the NAN specification.

According to an embodiment, the synchronization beacon 630 may be a signal for maintaining synchronization (e.g., time clock synchronization) mutually among a plurality of electronic devices. The synchronization beacon 630 may include at least one piece of information accompanied by the mutual synchronization among the plurality of electronic devices. For example, the synchronization beacon 630 may include at least one from among a frame control (FC) field indicating a function of a signal (e.g., beacon), a broadcast address, a media access control (MAC) address of an electronic device that transmits the synchronization beacon 630, a cluster identifier, a sequence control field, a time stamp for a beacon frame, a beacon interval field indicating an interval between start points of the synchronized communication sections, or capability information of the electronic device that transmits the synchronization beacon 630. Alternatively, the synchronization beacon 630 may include an information element that is related to at least one proximity network, and may include, for example, a service related content that may be provided based on a proximity network.

According to an embodiment, the service discovery frame 640 may be a signal for advertising a service among the plurality of electronic devices and for exchanging information related to the service based on a proximity network. According to the NAN specification, the service discovery frame 640 may be a vendor specific public action frame, and may include various fields. For example, the service discovery frame 640 may include an information element related to at least one proximity network.

According to an embodiment, the wake-up packet (WUR) 650 may be a packet used for waking up another electronic device that is sleeping. The WUR 650 may include a structure of the wake-up packet 300 of FIGS. 3A to 3C and a structure of a WUR packet to be described later in FIGS. 8A to 8E. The wake-up packet 650 may include wake-up delay information, wake-up period information, and information associated with an operating channel. According to an embodiment, transmission of a WUR may be triggered as traffic is generated.

Referring to FIG. 6, for communication with another electronic device, an electronic device may transmit or receive a WUR 650a or 650b to wake up an electronic device that is sleeping. The electronic device may transmit or receive the WUR 650a or 650b according to a wake-up packet transmission or reception scheme as described in FIGS. 1 to 5.

The electronic device may transmit or receive at least one service discovery frame (SDF) 640 during a (U) SD period (SDP) 610. During the (U)SD period 610, the electronic device may be in a (U)SD state of FIG. 5. The SDP 610 may occupy a k-time unit (TU) according to a configuration of the electronic device in operation 660. k may not be a fixed value and may be changed according to a configuration.

The electronic device may transmit or receive at least one synchronization beacon 630 in a sync window (or synchronization period) 620 after the SDP 610. The SW 620 may occupy an m-TU according to a configuration of the electronic device in operation 665. m may not be a fixed value and may be changed according to a configuration.

According to an embodiment, an interval from the start point of the sync window 620 and a next sync window may be configured as an SW interval 670, and may occupy an n-TU according to a configuration of the electronic device. n may not be a fixed value and may be changed according to a configuration. For example, an interval from the start point of the first SW 620a to the start point of the second SW 620b may be configured as the SW interval 670. As another example, even when the SW 620c starts before SDP 610c, an interval between the start point of the second SW 620b to the third SW 620c may be configured as another SW interval 675. However, in this instance, an n'-TU may be occupied, instead of the n-TU. n' may not be a fixed value and may be changed according to a configuration. To increase the amount of energy saved, a magnitude of the SW interval 670 or 675 may be increased.

According to an embodiment, an interval between the SDP 610 and a next SDP may be configured as an SDP interval 680, and may occupy an 1-TU according to a configuration of the electronic device. l may not be a fixed value and may be changed according to a configuration. For example, an interval from the start point of the first SDP 610a to the start point of the second SDP 610b may be configured as the SDP interval 680. As another example, even when the SW 620c starts before SDP 610c, an interval between the start point of the second SDP 610b to the third SDP 610c may be configured as another SDP interval 685. However, in this instance, an n'-TU may be occupied, instead of the n-TU. n' may not be a fixed value and may be changed according to a configuration. According to an embodiment, the SDP interval 680 or 685 may be adjusted based on a discovery result in an SDP for discovery delay and energy conservation. To increase the amount of energy saved, a magnitude of the SDP interval 680 may be increased.

According to an embodiment, the discovery delay time and energy conservation are in a tradeoff relationship, and thus the magnitudes of the SW interval 670 or 675 and the SDP interval 680 or 685 may be changed based on an application or service type (e.g., data transmission capacity, simple state sharing).

According to an embodiment, the magnitudes of the SW interval 670 or 675 and the SDP interval 680 or 685 may be changed via the SDF 640, the synchronization beacon 630, or the WUR 650. When a target wake-up time (TWT) is configured via the SDF 640 and synchronization beacon 630, the electronic device may need to be in sleep (power-saving mode) until the configured TWT elapses. Therefore, for on-demand wake-up, the WUR may be utilized in common. According to another embodiment, although a TWT is configured, a sleeping electronic device may be woken via the WUR 650. The WUR 650 may be used in order to adjust the magnitudes of the SW interval 670 or 675 and the SDP interval 680 or 685 according to a momentary condition.

According to an embodiment, k, m, n, and l values may be included in scheduling information included in the SDF 640, synchronization beacon 630, or WUR 650, as period information values.

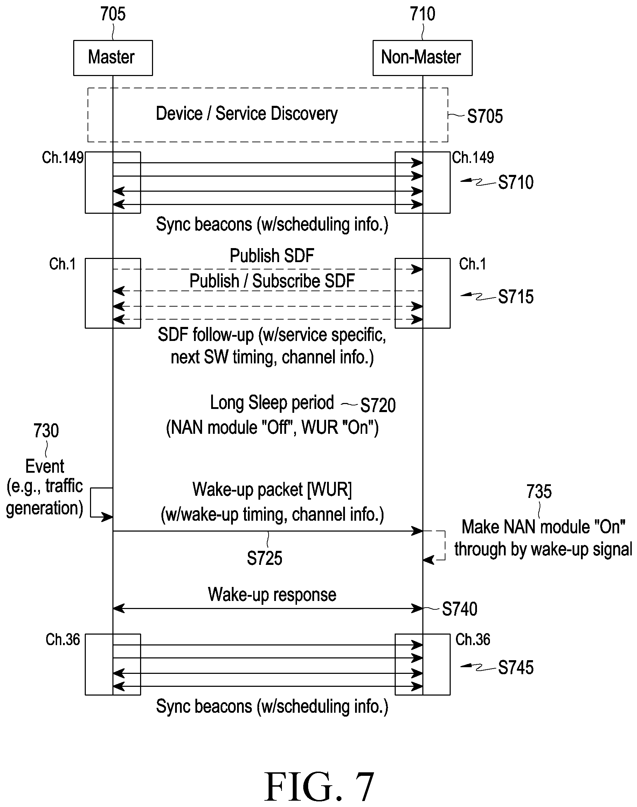

FIG. 7 is a flowchart illustrating wake-up and communication performed among a plurality of electronic devices according to an embodiment of the disclosure.

FIG. 7 is a flowchart illustrating a wake-up operation and a series of operations of discovery communication performed among a plurality of electronic devices. Two electronic devices 705 and 710 are included in FIG. 7, but the disclosure is not limited thereto and a plurality of electronic devices may be included.

The electronic devices 705 and 710 of FIG. 7 may be electronic devices same as a first electronic device and a second electronic device described in FIGS. 4A to 6.

The first electronic device 705 of FIG. 7 may be a mobile electronic device, which is movable. The second electronic device 710 of FIG. 7 may be a mobile electronic device, which is movable. The first electronic device 705 and the second electronic device 710 may be devices that are capable of performing short-range communication according to a neighboring awareness networking (NAN) or WiFi-aware specification.

FIG. 7 discloses a method of waking up an electronic device that is sleeping and performing service discovery based on a wake-up radio between the first electronic device 705 and the second electronic device 710. The first electronic device 705 may be a master electronic device that performs wake-up and discovery, and the second electronic device 710 may be a non-master electronic device that is woken up from a sleep mode.

Referring to FIG. 7, the first electronic device 705 and the second electronic device 710 may perform communication via a device or service discovery operation in operation S705. For example, the device or service discovery operation may be operation including at least one of the unsynchronization service discovery procedure of operation S504, the synchronization beacon procedure of operation S505, and the NDP setup procedure of operation S506 in FIG. 5.

After finishing the discovery procedure in operation S705, the first electronic device 705 and the second electronic device 710 may perform a synchronization beacon procedure in operation S710. In the synchronization beacon procedure in operation S710, the first electronic device 505 and the second electronic device 510 may transmit and receive a synchronization beacon. The synchronization beacon may include scheduling information, information (e.g., application information, service state information) related to a service or data to be transmitted, NAN capability information, or capability information of NAN data path scheduling. According to an embodiment, the synchronization beacon procedure in operation S710 may be performed in a channel determined based on information indicated by the previous discovery procedure of operation S705. For example, the synchronization beacon procedure may be performed in channel 149.

After the synchronization beacon procedure, the second electronic device 710 may perform a service discovery procedure with the first electronic device 705 in operation S715. In the service discovery procedure, the first electronic device 705 may transmit an SDF publish message to the second electronic device 710. The SDF publish message may include device information (e.g., device name, ID, or phone number information) or user information (user name, profile information, or account information). For example, the service discovery procedure may be performed in channel 1. When the second electronic device 710 receives the SDF publish message, the second electronic device 710 may transmit, to the first electronic device 705, an SDF subscribe message in the same channel. Upon receiving the SDF subscribe message, the first electronic device 705 may perform SDF follow-up with the second electronic device 710. While the SDF follow-up is performed, the first electronic device 705 and the second electronic device 710 may transmit or receive service-specific information, (subsequent) SDP or DW timing information, channel information, vendor information, electronic device's capacity information, or scheduling information.

According to an embodiment, an electronic device may be configured to a sleep mode when no data packet is transmitted or received any longer during communication between electronic devices or according to user selection, in operation S720. This period may be referred to as a long sleep period. In the sleep mode, an electronic device may change, to the "off" state, a first communication module (e.g., NAN module), which is a primary communication module capable of transmitting or receiving a data packet and a wake-up packet, and may maintain only a second communication module (e.g., LP-WUR of FIGS. 4A and 4B), which is a communication module capable of receiving a wake-up packet, in the "on" state. While the electronic device is configured to the sleep mode, the power consumption of the electronic device may be reduced.

When an event occurs in the first electronic device 705 in the sleep mode, it may be a trigger for starting communication in operation S730. For example, when traffic occurs, the first electronic device 705 may prepare communication with the second electronic device 710. When an event occurs, the first electronic device 705 may transmit a wake-up packet to the second electronic device 710 in operation S725. The wake-up packet may include a wake-up timing, and channel information that is to perform communication.

When the second electronic device 710 receives the wake-up packet, the second communication module may transmit a wake-up signal to wake up the first communication module in operation S735. When the first communication module receives the wake-up signal from the second communication module, the first communication module may change to the "on" state and may prepare to receive a data packet. When the second electronic device 710 changes to a wake-up state, the second electronic device 710 may transmit a wake-up response to the first electronic device 705 in operation S740.

Based on channel information during a wake-up procedure, the first electronic device 705 and the second electronic device 710 may perform a synchronization beacon procedure in operation S745. For example, the synchronization beacon procedure may be performed in channel 36. The first electronic device 705 and the second electronic device 710 may transmit and receive a synchronization beacon. The synchronization beacon may include scheduling information.

FIGS. 8A to FIG. 8E are diagrams illustrating wake-up packet structures according to an embodiment of the disclosure.

The wake-up packet of FIGS. 8A to 8E may be the same as the wake-up packet (WUR) in FIGS. 2A to 7.

Referring to FIG. 8A, a wake-up packet 800 of FIG. 8A may be a WUR data portion in the WUR portion 300b of the wake-up packet 300 of FIG. 3A. The wake-up packet 800 may include a MAC header field 805, a frame body 810, and an FCS field 815. The MAC header field 805 may have a 32-bit length. The frame body 810 may be configured to various lengths, and may include a payload. The FCS field 815 may have a 16-bit length, and may be a field including a CRC for checking a frame.

FIG. 8B illustrates subdivisions of the MAC header field 805 of FIG. 8A. Referring to FIG. 8B, the MAC header field 805 may include a frame control field 820, an identifier (ID) field 822, and a type dependent control field 824. The frame control field 820 may be assigned with 8 bits, and may be a field for frame control. The ID field 822 may be assigned with 12 bits, and may include information for identifying a WUR frame. The type dependent control field 824 may be assigned with 12 bits, and may be a field that includes control information depending on a WUR frame type.

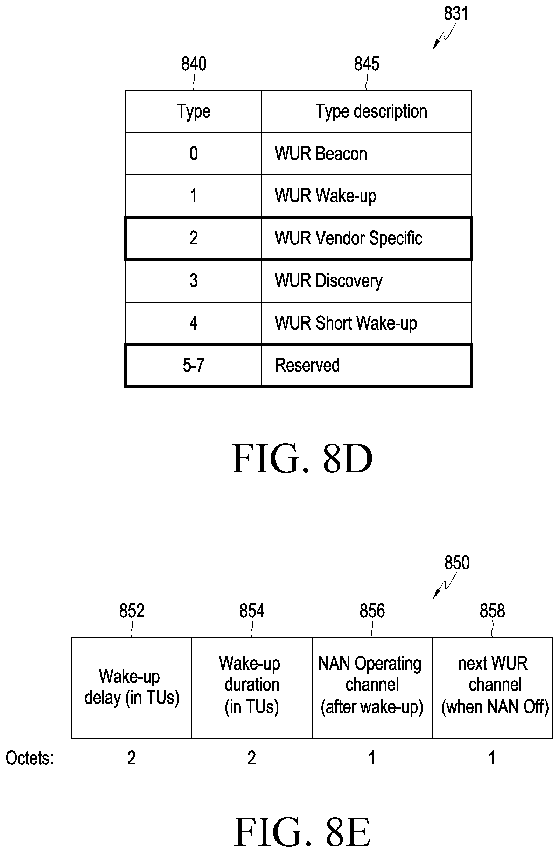

FIG. 8C illustrates subdivisions of the frame control field 820 of the MAC header field. Referring to FIG. 8C, the frame control field 820 may include a type field 831, a protected field 832, a frame body present field 833, and a length/miscellaneous field 834. The type field 831 may be assigned with 3 bits, and may indicate a WUR frame type illustrated in FIG. 8D. The protected field 832 may be assigned with 1 bit, and may indicate whether information contained in the WUR frame is processed by a message integrity check (MIC) algorithm. The frame body present field 833 may be assigned with 1 bit, and may be a field indicating whether the frame body field 810 exists. The length/miscellaneous field 834 may be assigned with 3 bits, and may include a length field when the frame body present field 833 is 1 and may include a miscellaneous field when the frame body present field 833 is 0.

FIG. 8D illustrates a table representing the type field 831 of FIG. 8C. The type field 831 may have a type value 840 in the range of 0 to 7 based on three bits. Each type value 840 will be described. When the type value is 0, a WUR frame type may be WUR beacon. When the type value is 1, the WUR frame type may be WUR wake-up. When the type value is 2, the WUR frame type may be WUR vendor-specific. When the type value is 3, the WUR frame type may be WUR discovery. When the type value is 4, the WUR frame type may be WUR short wake-up. Type values of 5 to 7 may be reserved.

FIG. 8E illustrates a WUR frame element format for a wake-up packet according to the disclosure. A WUR frame element format 850 may be included in the frame body field 810 of FIG. 8A. According to an embodiment, the WUR frame element format 850 may be included in the frame body field 810 when the value of the type field 831 of FIG. 8C is 2 or a value in the range of 5 to 7. The WUR frame element format 850 may include a wake-up delay field 852, a wake-up duration field 854, a NAN operating channel field 856, and a next WUR channel field 858. The wake-up delay field 852 may indicate when to receive a next wake-up packet. The wake-up duration field 854 may indicate how long a wake-up state is to be maintained. The wake-up delay field 852 and the wake-up duration field 854 may be assigned with 2 bits, respectively, and may be represented in units of TUs. The NAN operating channel field 856 may be assigned with 1 bit, and may include information indicating a channel to perform a NAN operation after wake-up. The next WUR channel 858 field may be assigned with 1 bit, and may include information indicating which channel is to be used for a next WUR operation when a NAN module is off.

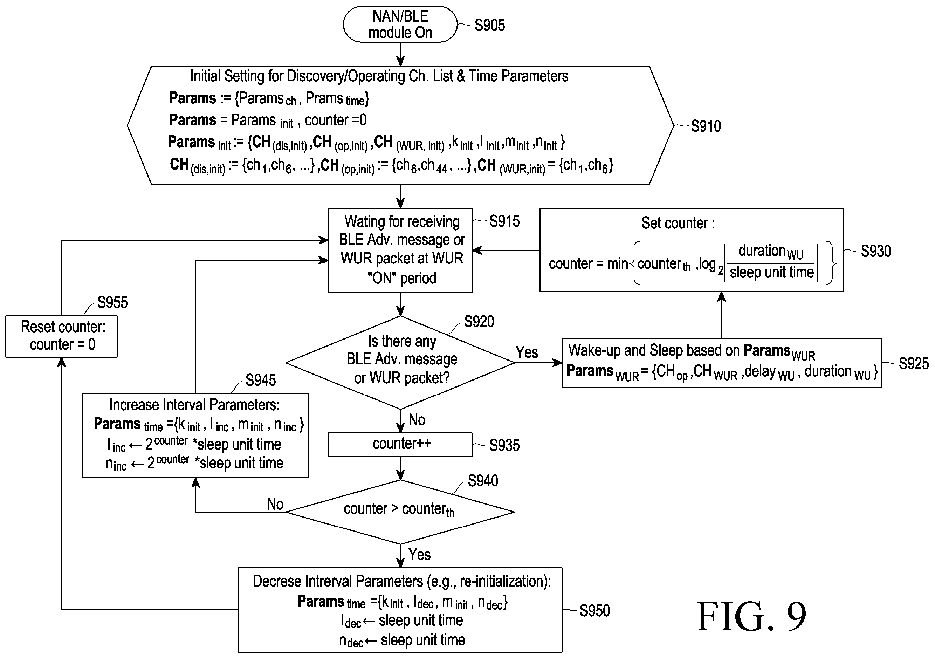

FIG. 9 is a flowchart illustrating a method of adjusting a synchronization period and a service discovery period based on a wake-up packet according to an embodiment of the disclosure.

FIG. 9 proposes a method of adjusting a synchronization beacon period and a service discovery period based on whether a wake-up packet is received. For example, the flowchart of FIG. 9 may be a method of adjusting k, l, m, n values of FIG. 6. An electronic device of FIG. 9 may be the same as an electronic device, a first electronic device, and a second electronic device in FIGS. 1 to 8E.

Referring to FIG. 9, the electronic device may turn a NAN or BLE module on in order to perform short-range communication with another electronic device in operation S905. The electronic device may allocate initial values of a discovery/operating channel list and channels and time parameters, which are needed for performing NAN communication, in operation S910. The parameters may include time parameter and channel information of FIGS. 4A to 8E. For example, the discovery/operating channel list may include information associated with channels capable of being used as discovery channel information and operating channel information. Initial discovery channel information may be denoted by $CH_{(dis, init)}$. Initial operating channel information may be denoted by $CH_{(op, init)}$. Initial WUR channel information may be denoted by $CH_{(WUR, init)}$. For example, $CH_{(dis, init)}$ may be configured to $\{ch_1, ch_6,..\}$, $CH_{(op, init)}$ may be configured to $\{ch_6, ch_{44},..\}$, and $CH_{(WUR, init)}$ may be configured to $\{ch_1, ch_6,..\}$. The time parameters may be magnitude information of an SDP duration (SDP), an SW duration (SW), an SW interval, and an SDP interval, which have been described in FIG. 6, and may include k, m, n, and l values, respectively. As initial time parameters, $k_{init}$, $m_{init}$, $n_{init}$, $l_{init}$ values may be included. An initial counter value may be configured to 0.

After allocating the initial values of the discovery/operating channel list and scheduling parameters, the electronic device may wait for reception of a BLE advertisement message or WUR packet when the WUR communication module is in the "on" state, in operation S915. The electronic device may determine whether a BLE advertisement message or a WUR packet is received, in operation S920.

When a BLE advertisement message or a WUR packet is received, the electronic device may determine a sleep state or a wake-up state of the electronic device based on a WUR parameter included in the BLE advertisement message or the WUR packet, in operation S925. The WUR parameter may include operating channel information, WUR channel information, WUR delay information, and WUR duration information. For example, $Params_{WUR}$ may be expressed as $\{CH_{OP}, CH_{WUR}, delay_{WU}, duration_{WU}\}$. For example, $duration_{WU}$ may be determined to be $min(l,n)$ or may be determined to be $2^{counter} *$ sleep unit time. Subsequently, the counter value may be changed to a lower value between an arbitrarily configured counter threshold value ($counter_{th}$) and a value obtained based on the WUR duration information, in operation S930. For example, the counter value may be determined to be a value smaller between $counter_{th}$ and $\log_2 \frac{duration_{WU}}{sleep\ unit\ time}$. Here, a sleep unit time may be configured in advance.

When a BLE advertisement message or a WUR packet is not received, the electronic device may adjust the SDP interval and the SW interval in order to receive a BLE advertisement message or a WUR packet. When a BLE advertisement message or a WUR packet is not received, the electronic device may increase the counter value by 1 in operation S935. After increasing the counter value by 1, the electronic device may determine whether the current counter value has a value greater than the arbitrarily configured counter threshold value in operation S940.

When the current counter value is less than or equal to the counter threshold value, the electronic device may perform adjustment to increase the SDP interval and the SW interval in operation S945. Among the time parameters, the SDP interval value $l_{init}$) and the SW interval value ($n_{init}$) may be adjusted. The increased time parameter values may be denoted by $l_{inc}$ and $n_{inc}$. For

example, $I_{inc}$, that is the increased SDP interval value may be determined to be $2^{counter}$ * sleep unit time. In addition, $n_{inc}$ that is the increased SW interval value may be determined to be $2^{counter}$ * sleep unit time.

When the current counter value is greater than the counter threshold value, the electronic device may perform adjustment to decrease the SDP interval and the SW interval in operation S950. Among the time parameters, the SDP interval value $I_{init}$) and the SW interval value ($n_{init}$) may be adjusted. In this instance, this may be a method of resetting the SDP interval and the SW interval. The decreased time parameter values may be denoted by $I_{dec}$ and $n_{dec}$. For example, $I_{inc}$ that is the decreased SDP interval value may be determined to be a sleep unit time. In addition, $n_{inc}$ that is the decreased SW interval value may be determined to be a sleep unit time. After adjusting the time parameters, the electronic device may reset the counter value to 0 in operation S955.

According to an embodiment, the electronic device may store channel list and time parameter information determined to be appropriate for the WiFi-aware specification, service-specific channel list and time parameter information, vendor-specific channel list and time parameter information, in advance. In addition, the electronic device may perform transmission or reception of the channel list and time parameter information determined to be appropriate for the WiFi-aware specification, service-specific channel list and scheduling parameter information, and vendor-specific channel list and scheduling parameter information, with another electronic device via an SDF and synchronization beacon.

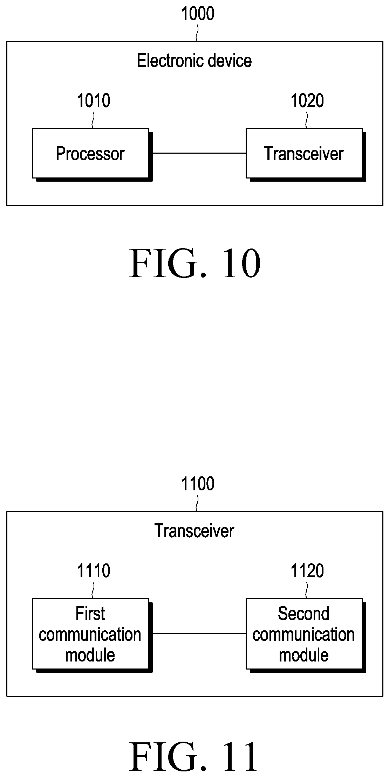

FIG. 10 is a diagram illustrating a structure of an electronic device according to an embodiment of the disclosure.

An electronic device, a first electronic device, and a second electronic device in FIGS. 1 to 9 and FIGS. 12 to 19 of the disclosure may be the same as the electronic device of FIG. 10. As illustrated in FIG. 10, an electronic device 1000 of the disclosure may include at least one controller (processor) 1010 and a transceiver 1020 including a receiver and a transmitter. The electronic device 1010 may include memory (not illustrated). The transceiver 1020 and the memory may be connected to the at least one processor 1010 so as to operate under the control of the at least one processor 1010.

The at least one processor 1010 may perform control so that the operations of the electronic device described in FIGS. 1 to 9, and FIGS. 12 to 19 of the disclosure are performed. The transceiver 1020 may perform, with another electronic device, transmission or reception of an SDF and a synchronization beacon, data information, a wake-up packet, and a wake-up signal. The transceiver 1020 may be configured as illustrated in FIG. 11.

FIG. 11 is a diagram illustrating a structure of a transceiver according to embodiments of the disclosure.

As illustrated in FIG. 11, the electronic device 1100 of the disclosure may include a first communication module 1110 and a second communication module 1120 capable of performing communication. The first communication module 1110 may be a communication module capable of transmitting or receiving both a wake-up packet and a data packet. For example, the first communication module 1110 may include a module that supports the IEEE standard 802.11. In addition, the first communication module 1110 may include a NAN module. The second communication module 1120 may be a communication module that is capable of receiving only the wake-up packet 420 and transmitting a wake-up signal to the first communication module 1110. For example, the second communication module 1120 may include a low power wake-up radio (LP-WUR) module. The first communication module 1110 and the second communication module 1120 may be electrically connected to each other, and may perform communication.

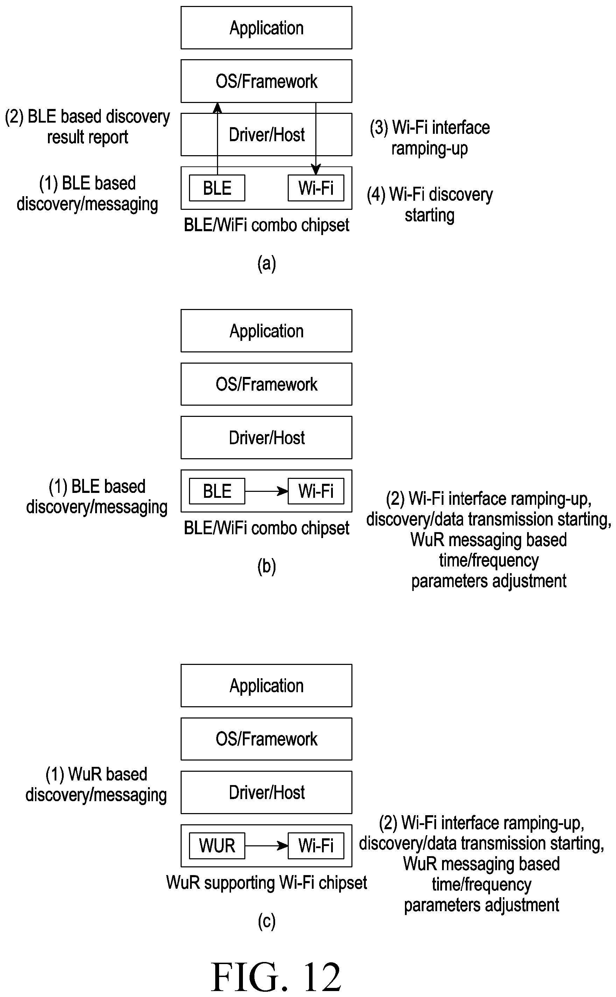

FIGS. 12A to 12C are diagrams illustrating a process of triggering a Wi-Fi interface via intra-electronic device signaling according to various embodiments of the disclosure.

Referring to FIG. 12A, the electronic device may include an application layer, an operating system (OS)/framework layer, a driver/host layer, and a BLE and Wi-Fi layer. According to an embodiment, a BLE communication module and a Wi-Fi communication module in the BLE and Wi-Fi layer may be embodied together in one chipset. According to an embodiment, the electronic device may perform BLE-based Wi-Fi triggering based on a BLE/Wi-Fi combo chipset. The BLE module in the electronic device may perform a BLE-based discovery procedure and/or BLE-based messaging transmission or reception. The BLE module in the electronic device may transfer a BLE-based discovery result report to a higher layer (OS/framework layer, and/or driver/host layer). The OS/framework layer in the electronic device may transfer, to the Wi-Fi module in the BLE and Wi-Fi layer, a command for ramping up a Wi-Fi interface. The Wi-Fi module in the electronic device may begin a Wi-Fi discovery procedure. The electronic device may immediately or dynamically adjust Wi-Fi aware operating time and/or frequency resource related parameters among devices based on BLE and wake-up radio (WUR) messaging.

Referring to FIG. 12B, the electronic device may include an application layer, an OS/framework layer, a driver/host layer, and a BLE and Wi-Fi layer. According to an embodiment, a BLE communication module and a Wi-Fi communication module in the BLE and Wi-Fi layer may be embodied together in one chipset. According to an embodiment, the electronic device may perform a BLE-based Wi-Fi triggering based on a BLE/Wi-Fi combo chipset. The BLE module in the electronic device may perform a BLE-based discovery procedure and/or BLE-based messaging transmission or reception. The BLE module in the electronic device may transfer a wake-up signal to the Wi-Fi module via an interface in the chipset. The Wi-Fi module in the electronic device may perform at least one operation among Wi-Fi interface ramping-up, discovery/data transmission starting, and WUR messaging-based time and/or frequency parameter adjustment. The electronic device may immediately or dynamically adjust Wi-Fi aware operating time and/or frequency resource related parameters among devices based on BLE and WUR messaging.

Referring to FIG. 12C, the electronic device may include an application layer, an OS/framework layer, a driver/host layer, and a WUR and Wi-Fi layer. According to an embodiment, a WUR module and a Wi-Fi module in the WUR and Wi-Fi layer may be embodied together in one chipset. According to an embodiment, the electronic device may perform a WUR-based Wi-Fi triggering based on a WUR supporting Wi-Fi chipset. The WUR module in the electronic device may perform a WUR-based discovery procedure and/or WUR-based messaging transmission or reception. The WUR module in the electronic device may transfer a wake-up signal to the Wi-Fi module via an interface in the chipset. The Wi-Fi module in the electronic device may perform at least one operation among Wi-Fi interface ramping-up, discovery/data transmission starting, and WUR messaging-based time and/or frequency parameter adjustment. The electronic device may immediately or dynamically adjust Wi-Fi aware operating time and/or frequency resource related parameters among devices based on WUR messaging.

Referring to FIGS. 12B and 12C, the electronic device may include a structure capable of directly transmitting a wake-up signal in a single chipset, and may reduce a time spent in ramping up the Wi-Fi interface internally in the chipset of a lower layer.

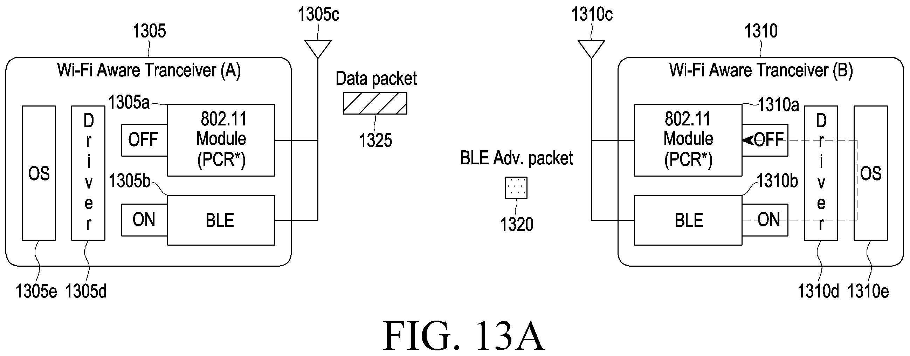

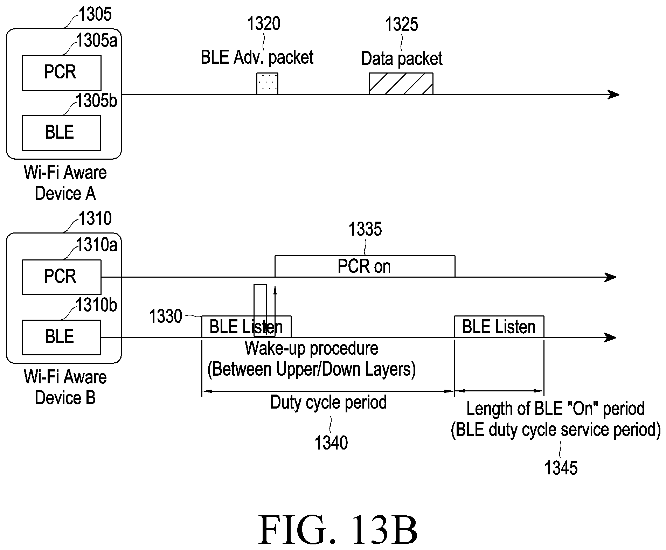

FIG. 13A and FIG. 13B are diagrams illustrating a device that performs a wake-up operation and operation of the device according to an embodiment of the disclosure.

FIG. 13A illustrates structures of devices that perform communication using a wake-up signal. FIG. 13B illustrates operations of devices that perform communication using a wake-up signal.

A first electronic device 1305 of FIG. 13A may be a mobile electronic device, which is movable. A second electronic device 1310 of FIG. 13A may be a mobile electronic device, which is movable. The first electronic device 1305 and the second electronic device 1310 may be devices that are capable of performing short-range communication according to a neighboring awareness networking (NAN) or WiFi-aware specification.

Referring to FIG. 13A, the first electronic device 1305 may include a first communication module 1305a, a second communication module 1305b, an antenna 1305c, a driver module 1305d, and an OS module 1305e. The first communication module 1305a may be a communication module capable of transmitting or receiving both a BLE advertisement packet 1320 and a data packet 1325. Here, the first communication module 1305a may be referred to as a primary connectivity radio (PCR). For example, the first communication module 1305a may include a module that supports the IEEE standard 802.11. The second communication module 1305b may be a module capable of receiving the BLE advertisement packet 1320. For example, the second communication module 1305b may include a BLE module.

The second electronic device 1310 may include a first communication module 1310a, a second communication module 1310b, an antenna 1310c, a driver module 1310d, and an OS module 1310e. The first communication module 1310a may be a communication module capable of transmitting or receiving both the BLE advertisement packet 1320 and the data packet 1325. Here, the first communication module 1310a may be referred to as a PCR. The second communication module 1310b may be a module capable of receiving the BLE advertisement packet 1320. For example, the second communication module 1310b may include a BLE module.

The first communication module 1305a or 1310a and the second communication module 1305b or 1310b of the first electronic device 1305 and the second electronic device 1310 may perform communication with another device by sharing one antenna 1305c or 1310c or by using respective antennas. The first communication module 1305a or 1310a and the second communication module 1305b or 1310b may be capable of communicating with each other.

When receiving the BLE advertisement packet 1320 from the outside, the second communication module 1305b or 1310b may transmit a BLE-based discovery result report to the OS module 1305e or 1310e via a driver module 1305d or 1310d. The OS module 1305e or 1310e may transmit a command for ramping up a Wi-Fi interface to the first communication module 1305a or 1310a. While not performing communication with an external device, the second electronic device 1310 may maintain the first communication module 1310a in the OFF state and may maintain only the second communication module 1310b in the ON state. When receiving the BLE advertisement packet 1320 from an external device via the second communication module 1310b, the second electronic device 1310 may perform a wake-up procedure via the driver module 1310d, the OS module 1310e, the first communication module 1310a, may change the first communication module 1310a to the ON state, and may perform data communication (data packet transmission or reception). The first communication module 1310a changed to the ON state may receive the data packet 1325.

Referring to FIG. 13B, the first electronic device 1305 may transmit the BLE advertisement packet 1320 first by using the first communication module 1305a, and then may transmit the data packet 1325. Although the second electronic device 1310 includes the first communication module 1310a and the second communication module 1310b, the second electronic device 1310 may maintain the first communication module 1310a in the OFF state and maintain only the second communication module 1310b in the ON state while not performing communication with the outside. During a BLE listen period 1330 in which the second communication module 1310b is in the ON state, the second communication module 1310b may receive the BLE advertisement packet 1320. The second communication module 1310b that receives the BLE advertisement packet 1320 may perform a wake-up procedure via the driver module 1310d, the OS module 1310e, and the first communication module 1310a, and may change the first communication module 1310a to the ON state so that the first communication module 1310a receives the data packet 1325. The first communication module 1310a changed to the ON state may receive the data packet 1325 during a PCR ON period 1335. When the PCR ON period 1335 elapses, the first communication module 1310a may be changed to the OFF state. According to an embodiment, a period 1345 of the BLE listen period 1330 in which the second communication module 1310b is in the ON state may be arbitrarily configured. For example, the period 1345 of the BLE listen period 1330 may be a length of BLE "On" period. In addition, the BLE listen period 1330 in which the second communication module 1310b is in the ON state may be configured to be on periodically. A period from a start of the first BLE listen period 1330 to a start of the second WUR ON period may be determined as a duty cycle period 1340.

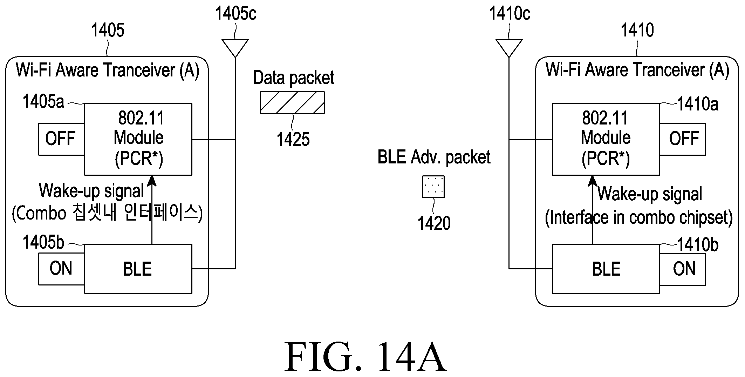

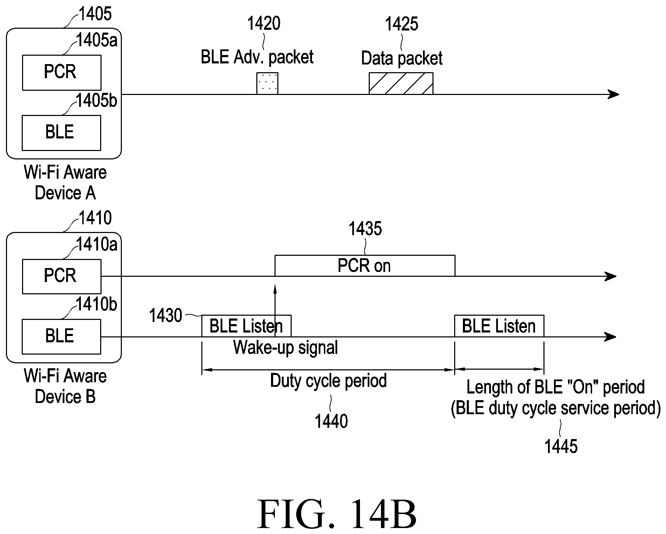

FIG. 14A and FIG. 14B are diagrams illustrating a device that performs a wake-up operation and operation of the device according to an embodiment of the disclosure.

FIG. 14A illustrates structures of devices that perform communication using a wake-up signal. FIG. 14B illustrates operations of devices that perform communication using a wake-up signal.

A first electronic device 1405 of FIG. 14A may be a mobile electronic device, which is movable. A second electronic device 1410 of FIG. 14A may be a mobile electronic device, which is movable. The first electronic device 1405 and the second electronic device 1410 may be devices that are capable of performing short-range communication according to a neighboring awareness networking (NAN) or WiFi-aware specification.

Referring to FIG. 14A, the first electronic device 1405 may include a first communication module 1405a, a second communication module 1405b, and an antenna 1405c. The first communication module 1405a may be a communication module capable of transmitting or receiving both a BLE advertisement packet 1420 and a data packet 1425. Here, the first communication module 1405a may be referred to as a PCR. For example, the first communication module 1405a may include a module that supports the IEEE standard 802.11. The second communication module 1405b may be a module capable of receiving the BLE advertisement packet 1420. For example, the second communication module 1405b may include a BLE module.

The second electronic device 1410 may include a first communication module 1410a, a second communication module 1410b, and an antenna 1410c. The first communication module 1410a may be a communication module capable of transmitting or receiving both the BLE advertisement packet 1420 and the data packet 1425. Here, the first communication module 1410a may be referred to as a PCR. The second communication module 1410b may be a module capable of receiving the BLE advertisement packet 1420. For example, the second communication module 1410b may include a BLE module.

The first communication module 1405a or 1410a and the second communication module 1405b or 1410b of the first electronic device 1405 and the second electronic device 1410 may perform communication with another device by sharing one antenna 1405c or 1410c or by using respective antennas. The first communication module 1405a or 1410a and the second communication module 1405b or 1410b may be capable of communicating with each other.

When receiving the BLE advertisement packet 1420 from the outside, the second communication module 1405b or 1410b may transmit a wake-up signal to the first communication module 1405a or 1410a via intra-device signaling. While not performing communication with an external device, the second electronic device 1410 may maintain the first communication module 1410a in the OFF state and may maintain only the second communication module 1410b in the ON state. In the second electronic device 1410, when the second communication module 1410b receives the BLE advertisement packet 1420 from an external device, the second communication module 1410b transmits a wake-up signal to the first communication module 1410a and changes the first communication module 1410a to the ON state so that the first communication module 1410a performs data communication (data packet transmission or reception). The first communication module 1410a changed to the ON state may receive the data packet 1325.

Referring to FIG. 14B, the first electronic device 1405 may transmit the BLE advertisement packet 1420 first by using the first communication module 1405a, and then may transmit the data packet 1425. Although the second electronic device 1410 includes the first communication module 1410a and the second communication module 1410b, the second electronic device 1410 may maintain the first communication module 1410a in the OFF state and maintain only the second communication module 1410b in the ON state while not performing communication with the outside. During a BLE listen period 1430 in which the second communication module 1410b is in the ON state, the second communication module 1410b may receive the BLE advertisement packet 1420. The second communication module 1410b that receives the BLE advertisement packet 1420 may transmit a wake-up signal to the first communication module 1410a. The first communication module 1410a that receives the wake-up signal may change to the ON state in order to receive the data packet 1425, and may receive the data packet 1425 during a PCR ON period 1435. When the PCR ON period 1435 elapses, the first communication module 1410a may be changed to the OFF state. According to an embodiment, a period 1445 of the BLE listen period 1430 in which the second communication module 1410b is in the ON state may be arbitrarily configured. For example, the period 1445 of the BLE listen period 1430 may be referred to as a length of BLE "On" period. In addition, the BLE listen period 1430 in which the second communication module 1410b is in the ON state may be configured to be on periodically. A period from a start of the first BLE listen period 1430 to a start of the second WUR ON period may be determined as a duty cycle period 1440.

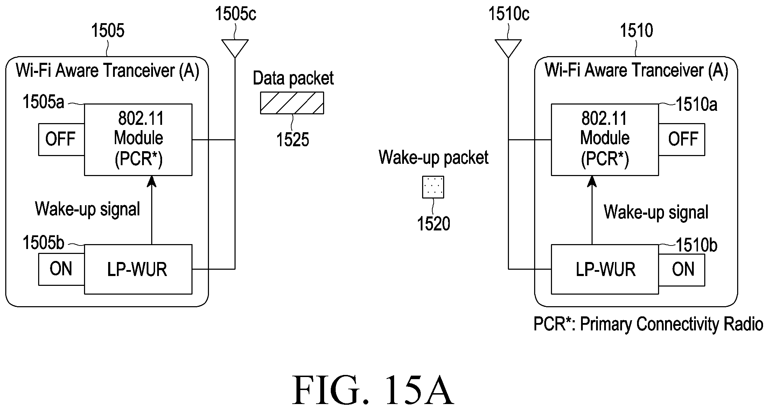

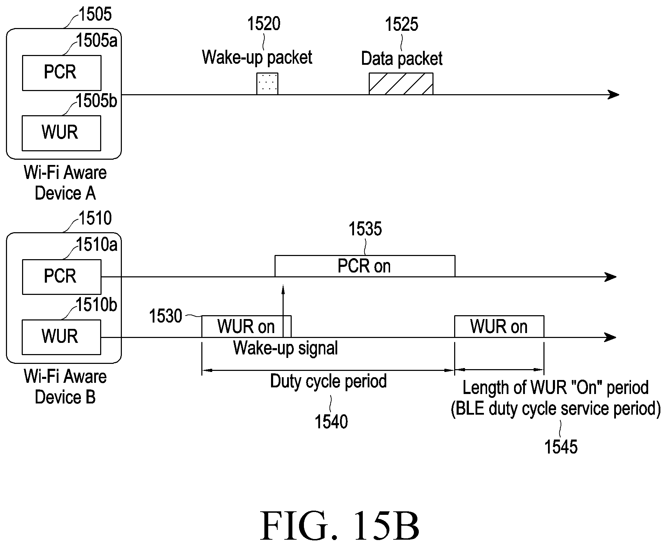

FIG. 15A and FIG. 15B are diagrams illustrating a device that performs a wake-up operation and operation of the device according to an embodiment of the disclosure.

FIG. 15A illustrates structures of devices that perform communication using a wake-up signal. FIG. 15B illustrates operations of devices that perform communication using a wake-up signal.

A first electronic device 1505 of FIG. 15A may be a mobile electronic device, which is movable. A second electronic device 1510 of FIG. 15A may be a mobile electronic device, which is movable. The first electronic device 1505 and the second electronic device 1510 may be devices that are capable of performing short-range communication according to a neighboring awareness networking (NAN) or WiFi-aware specification.

Referring to FIG. 15A, the first electronic device 1505 may include a first communication module 1505a, a second communication module 1505b, and an antenna 1505c. The first communication module 1505a may be a communication module capable of transmitting or receiving both a wake-up packet 1520 and a data packet 1525. Here, the first communication module 1505a may be referred to as a PCR. For example, the first communication module 1505a may include a module that supports the IEEE standard 802.11. The second communication module 1505b may be a module capable of receiving the wake-up packet 1520. For example, the second communication module 1405b may include an LP-WUR module.

The second electronic device 1510 may include a first communication module 1510a, a second communication module 1510b, and an antenna 1510c. The first communication module 1510a may be a communication module capable of transmitting or receiving both the wake-up packet 1520 and the data packet 1425. Here, the first communication module 1510a may be referred to as a PCR. The second communication module 1510b may be a module capable of receiving the wake-up packet 1520. For example, the second communication module 1410b may include an LP-WUR module.

The first communication module 1505a or 1510a and the second communication module 1505b or 1510b of the first electronic device 1505 and the second electronic device 1510 may perform communication with another device by sharing one antenna 1505c or 1510c or by using respective antennas. The first communication module 1505a or 1510a and the second communication module 1505b or 1510b may be capable of communicating with each other.

When receiving the wake-up packet 1520 from the outside, the second communication module 1505b or 1510b may transmit a wake-up signal to the first communication module 1505a or 1510a via intra-device signaling. While not performing communication with an external device, the second electronic device 1510 may maintain the first communication module 1510a in the OFF state and may maintain only the second communication module 1510b in the ON state. In the second electronic device 1510, when the second communication module 1510b receives the wake-up packet 1520 from an external device, the second communication module 1510b transmits a wake-up signal to the first communication module 1510a and changes the first communication module 1510a to the ON state so that the first communication module 1510a performs data communication (data packet transmission or reception). The first communication module 1510a changed to the ON state may receive the data packet 1325.

Referring to FIG. 15B, the first electronic device 1505 may transmit the wake-up packet 1520 first by using the first communication module 1505a, and then may transmit the data packet 1525. Although the second electronic device 1510 includes the first communication module 1510a and the second communication module 1510b, the second electronic device 1510 may maintain the first communication module 1510a in the OFF state and maintain only the second communication module 1510b in the ON state while not performing communication with the outside. During a WUR ON period 1530 in which the second communication module 1510b is in the ON state, the second communication module 1510b may receive the wake-up packet 1520. The second communication module 1510b that receives the wake-up packet 1520 may transmit a wake-up signal to the first communication module 1510a. The first communication module 1510a that receives the wake-up signal may change to the ON state in order to receive the data packet 1525, and may receive the data packet 1525 during a PCR ON period 1535. When the PCR ON period 1535 elapses, the first communication module 1510a may be changed to the OFF state. According to an embodiment, a period 1545 of the WUR ON period 1530 in which the second communication module 1510b is in the ON state may be arbitrarily configured. For example, the period 1545 of the WUR ON period 1530 may be a length of BLE "On" period. In addition, the WUR ON period 1530 in which the second communication module 1510b is in the ON state may be configured to be on periodically. A period from a start of the first WUR ON period 1530 to a start of the second WUR ON period may be determined as a duty cycle period 1540.

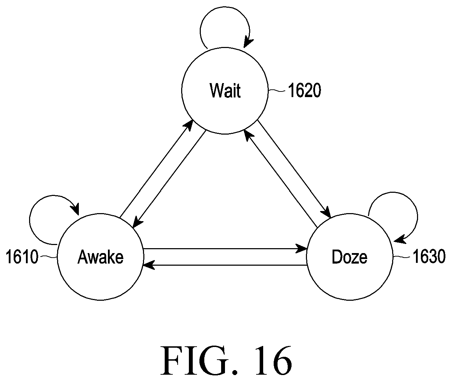

FIG. 16 is a diagram illustrating a change of a state of an electronic device according to an embodiment of the disclosure.

The electronic device according to an embodiment of the disclosure may operate in one state from among an awake state 1610, a wait state 1620, and a doze state 1630. For an initial setup speed and power saving, the electronic device may operate in the wait state 1620, instead of the awake state 1610 and the doze state 1630.

According to an embodiment, the electronic device may change the state in order of the awake state 1610, the wait state 1620, and the doze state 1630. Power consumption of the electronic device in the wait state 1620 may be between power consumption in the awake state 1610 and power consumption in the doze state 1630.

According to an embodiment, based on a user input, an external electronic device, and/or a command of a network, the electronic device may change to one state from among the awake state 1610, wait state 1620, and doze state 1630. According to an embodiment, the electronic device may change to one of the awake state 1610, wait state 1620, and doze state 1630 based on a start and/or end of a target wake-up time (TWT) function. According to an embodiment, based on explicit messaging via a BLE packet and/or WUR packet, the electronic device may change to one of the awake state 1610, wait state 1620, and doze state 1630.

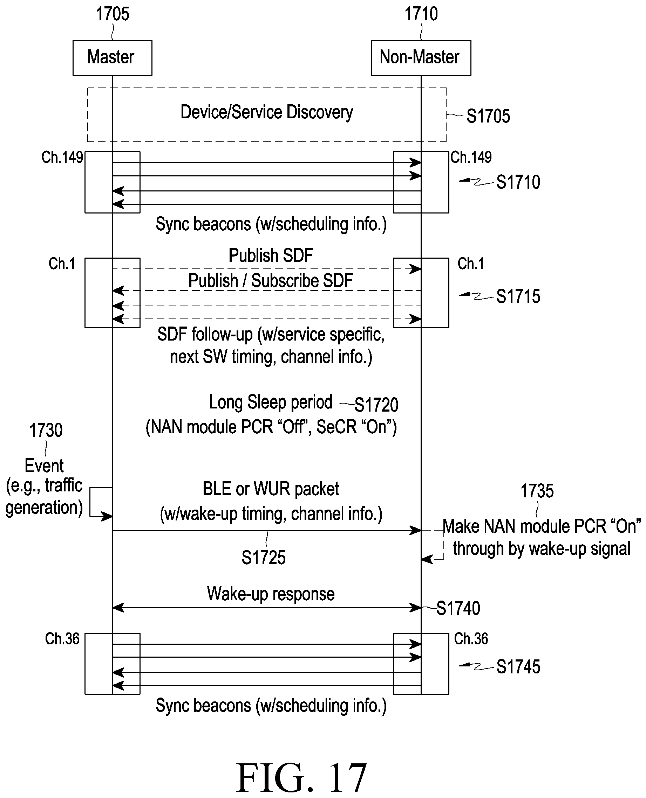

FIG. 17 is a flowchart illustrating wake-up and communication performed among a plurality of electronic devices according to an embodiment of the disclosure.

FIG. 17 is a flowchart illustrating a wake-up operation and a series of operations of discovery communication performed among the plurality of electronic devices. Two electronic devices 1705 and 1710 are included in FIG. 17, but the disclosure is not limited thereto and a plurality of electronic devices may perform corresponding operations. The first electronic device 1705 and the second electronic device 1710 may be devices that are capable of performing short-range communication according to a NAN or WiFi-aware specification.

FIG. 17 discloses a method of waking up an electronic device that is sleeping and performing service discovery based on a wake-up radio between the first electronic device 1705 and the second electronic device 1710. For example, the first electronic device 1705 may be a master electronic device that performs wake-up and discovery, and the second electronic device 1710 may be a non-master electronic device that is woken up from a sleep mode.

Referring to FIG. 17, the first electronic device 1705 and the second electronic device 1710 may perform communication via a device discovery or service discovery operation in operation S1705. For example, the device or service discovery operation may be operation including at least one of the unsynchronization service discovery procedure S504, the synchronization beacon procedure S505, and the NDP setup procedure S506 in FIG. 5.

After finishing the discovery procedure (operation S1705), the first electronic device 1705 and the second electronic device 1710 may perform a synchronization beacon procedure in operation S1710. In the synchronization beacon procedure in operation S1710, the first electronic device 1705 and the second electronic device 1710 may transmit and/or receive a synchronization beacon. The synchronization beacon may include scheduling information, information (e.g., application information, service state information) related to a service or data to be transmitted, NAN capability information, or capability information of NAN data path scheduling. According to an embodiment, the synchronization beacon procedure in operation S1710 may be performed in a channel determined based on information indicated by the previous discovery procedure in operation S1705. For example, the synchronization beacon procedure may be performed in channel 149.

After the synchronization beacon procedure in operation S1710, the second electronic device 1710 may perform a service discovery procedure with the first electronic device 1705 in operation S1715. In the service discovery procedure, the first electronic device 1705 may transmit an SDF publish message to the second electronic device 1710. The SDF publish message may include device information (e.g., device name, ID, or phone number information) or user information (user name, profile information, or account information). For example, the service discovery procedure may be performed in channel 1. When the second electronic device 1710 receives the SDF publish message, the second electronic device 1710 may transmit, to the first electronic device 1705, an SDF subscribe message in the same channel. When the first electronic device 1705 receives the SDF subscribe message, the first electronic device 1705 may perform an SDF follow-up procedure with the second electronic device 1710. While the SDF follow-up is performed, the first electronic device 1705 and the second electronic device 1710 may transmit and/or receive service-specific information, (subsequent) SDP or DW timing information, channel information, vendor information, electronic device's capacity information, or scheduling information.

According to an embodiment, the electronic devices may be configured to a sleep mode (or doze state or wait state of FIG. 16) when no data packet transmitted and/or received exists during communication between electronic devices, or according to user selection, in operation S1720. This period may be referred to as a long sleep period. In the sleep mode, the electronic device may change, to the "off" state, a first communication module (e.g., NAN module PCR) that is a PCR capable of transmitting and/or receiving at least one of a data packet, a wake-up packet, and a BLE advertisement packet, and may maintain, in the "on" state, only a second communication module that is a secondary connectivity radio (SCR) capable of receiving a BLE advertisement packet or a wake-up packet. While the electronic device is configured to the sleep mode, the power consumption of the electronic device may be reduced.

When an event occurs in the first electronic device 1705 in the sleep mode, it may be a trigger for starting communication in operation S1730. For example, when traffic occurs, the first electronic device 1705 may prepare communication with the second electronic device 1710. When an event occurs, the first electronic device 1705 may transmit a BLE packet or a wake-up packet to the second electronic device 1710 in operation S725.

When the second electronic device 1710 receives the BLE packet or the wake-up packet, the second communication module may transmit a wake-up signal to wake up the first communication module in operation S1735. When the first communication module receives the wake-up signal from the second communication module, the first communication module may change to the "on" state and may prepare to receive a data packet. When the second electronic device 1710 changes to the wake-up state, the second electronic device 1710 may transmit a wake-up response to the first electronic device 1705 in operation S1740.

Based on channel information during the wake-up procedure, the first electronic device 1705 and the second electronic device 1710 may perform a synchronization beacon procedure in operation S1745.

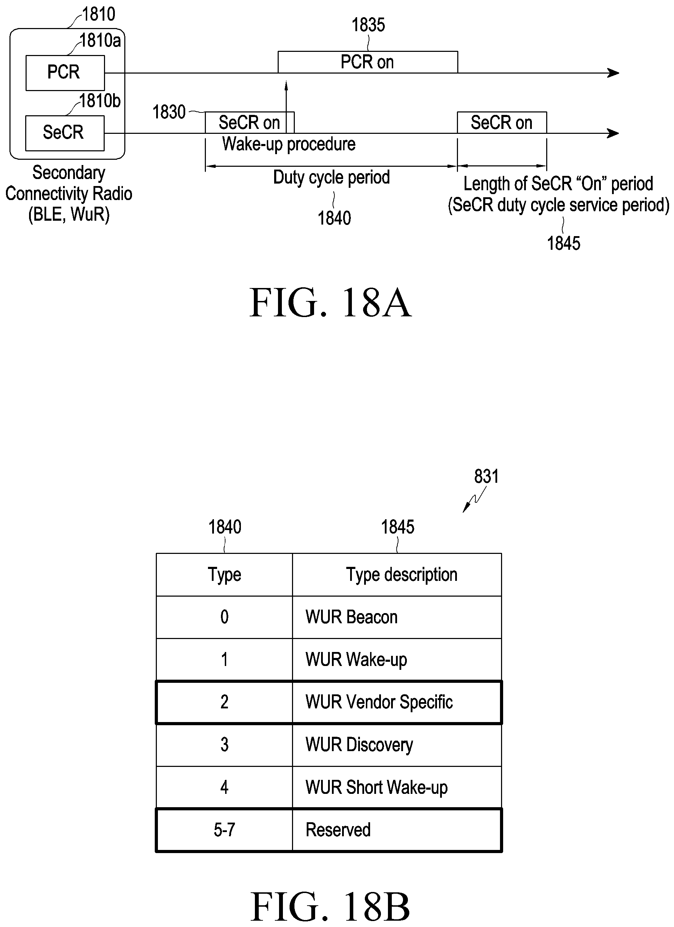

FIGS. 18A to FIG. 18C are diagrams illustrating a wake-up procedure and a structure of a wake-up packet according to an embodiment of the disclosure.

Referring to FIG. 18A, an electronic device 1810 may include a first communication module 1810a that is a PCR and a second communication module 1810b that is a secondary connectivity radio (SeCR). While not performing communication with an external device, the electronic device 1810 may maintain the first communication module 1810a in the OFF state and may maintain only the second communication module 1810b in the ON state. During an SeCR ON period 1830 in which the second communication module 1810b is in the ON state, the second communication module 1810b may receive a wake-up packet or a BLE advertisement packet. The second communication module 1810b that receives the wake-up packet or the BLE advertisement packet may transmit a wake-up signal to the first communication module 1810a. The first communication module 1810a that receives the wake-up signal may change to the on-state in order to receive a data packet, and may receive a data packet during a PCR ON period 1835. When the PCR ON period 1835 elapses, the first communication module 1810a may be changed to the OFF state. According to an embodiment, a period 1845 of the SeCR ON period 1830 in which the second communication module 1810b is in the ON state may be arbitrarily configured. For example, the period 1845 of the SeCR ON period 1830 may be a length of SeCR "On" period. In addition, the SeCR ON period 1830 in which the second communication module 1810b is in the ON state may be configured to be on periodically. A period from a start of the first SeCR ON period 1830 to a start of the second SeCR ON period may be determined as a duty cycle period 1840.

FIG. 18B illustrates a table representing the type field 831 in the frame control field 820 of the MAC header field of FIG. 8C. According to an embodiment, the type field 831 may have a type value 1840 in the range of 0 to 7 based on three bits. Each type value 1840 will be described. When a type value is 0, a WUR frame type may be WUR beacon. When the type value is 1, the WUR frame type may be WUR wake-up. When the type value is 2, the WUR frame type may be WUR vendor-specific. When the type value is 3, the WUR frame type may be WUR discovery. When the type value is 4, the WUR frame type may be WUR short wake-up. Type values of 5 to 7 may be reserved.

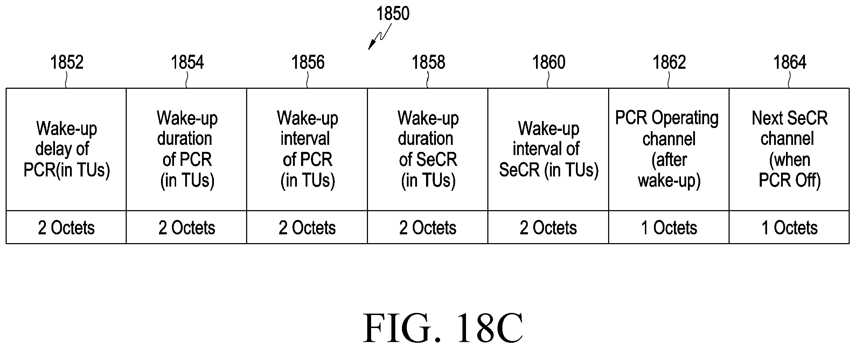

FIG. 18C illustrates a WUR frame element format 1850 for a wake-up packet according to the disclosure. According to an embodiment, a WUR frame element format 1850 may be included in the frame body field 810 of FIG. 8A. According to an embodiment, the WUR frame element format 1850 may be included in the frame body field 810 when the value of the type field 831 of FIG. 8C is 2 or the value of the type field 831 is a value in the range of 5 to 7.

The WUR frame element format 1850 may include the PCR's wake-up delay (wake-up delay of PCR) field 1852, the PCR's wake-up duration (wake-up duration of PCR) field 1854, the PCR's wake-up interval (wake-up interval of PCR) field 1856, the SeCR's wake-up duration (wake-up duration of SeCR) field 1858, the SeCR's wake-up interval (wake-up interval of SeCR) field 1860, a PCR operating channel (after wake-up) field 1862, and a next SeCR channel (when PCF off) field 1864.

The PCR's wake-up delay field 1852 may indicate a wake-up delay time of the PCR. The PCR's wake-up duration field 1854 may indicate how long a wake-up state of the PCR is to be maintained. The PCR's wake-up interval field 1856 may indicate a wake-up interval of the PCR. The SeCR's wake-up duration field 1858 may indicate how long a wake-up state of the SeCR is to be maintained. The SeCR's wake-up interval field 1860 may indicate a wake-up interval of the SeCR. The PCR operating channel field 1862 may include information indicating a channel in which the PCR operation is to be performed after wake-up. The next SeCR channel field 1864, when the PCR module is off, may include information indicating a channel in which a next SeCR operation is to be performed.

According to an embodiment, when SeCR (e.g., BLE or WUR) On energy consumption is not large, the electronic device may maintain the SeCR always in the ON state. In this instance, the electronic device may be capable of always receiving an SeCR (BLE or WuR) packet, and may immediately change the PCR to the ON state. The electronic device may start Wi-Fi aware DW/USD/SD immediately after receiving an SeCR (BLE or WuR) packet. In this instance, a time until the PCR's wake-up may be different and this may be reflected in a value of the PCR's wake-up delay field 1852.

According to an embodiment, the electronic device may perform a periodic operation in consideration of SeCR On energy consumption. In this instance, an SeCR packet may be transmitted multiple times. According to an embodiment, a duty cycle may be adjusted by adjusting a value of the SeCR's wake-up duration field 1858.

According to an embodiment, the electronic device may adjust a PCR (Wi-Fi aware) operation method by utilizing an element included in the SeCR (BLE or WUR). According to an embodiment, a wake-up interval of the PCR and a wake-up interval of the SeCR may be configured to the same value.

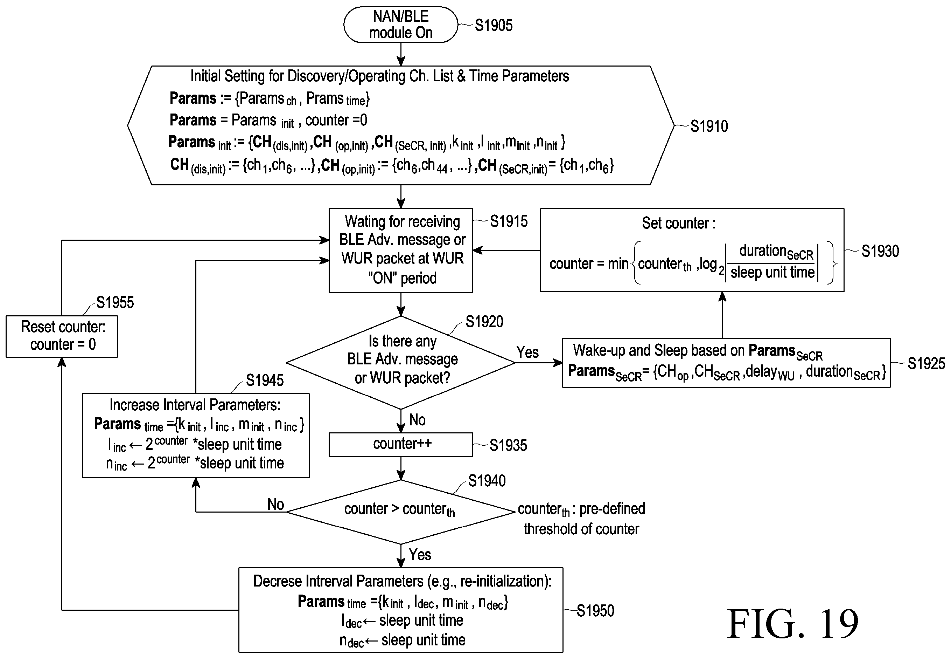

FIG. 19 is a flowchart illustrating a method of adjusting a synchronization duration and a service discovery duration based on a wake-up packet according to an embodiment of the disclosure.

FIG. 19 proposes a method of adjusting a synchronization beacon duration and/or a service discovery duration based on whether a BLE advertisement message or a wake-up packet is received. For example, the flowchart of FIG. 19 may be a method of adjusting k, l, m, n values of FIG. 6.

Referring to FIG. 19, the electronic device may turn a NAN or BLE module on in order to perform short-range communication with another electronic device in operation S1905. The electronic device may allocate initial values of a discovery/operating channel list and channels and time parameters, which are needed for performing NAN communication, in operation S1910. The parameters may include time parameter and channel information of FIGS. 4A to 8E. For example, the discovery/operating channel list may include information associated with channels capable of being used as discovery channel information and operating channel information. Initial discovery channel information may be denoted by $CH_{(dis, init)}$. Initial operating channel information may be denoted by $CH_{(op, init)}$. Initial WUR channel information may be denoted by $CH_{(SeCR, init)}$. For example, $CH_{(dis,init)}$ may be configured to $\{ch_1, ch_6, ...\}$, $CH_{(op,init)}$ may be configured to $\{ch_6, ch_{44}, ...\}$, and $CH_{(SeCR, init)}$ may be configured to $\{ch_1, ch_6\}$. The time parameters may be magnitude information of an SDP duration (SDP), an SW duration (SW), an SW interval, and an SDP interval, which have been described in FIG. 6, and may include k, m, n, and l values, respectively. As initial time parameters, $k_{init}$, $m_{init}$, $n_{init}$, and $l_{init}$ values may be included. An initial counter value may be configured to 0.

After allocating the initial values of the discovery/operating channel list and scheduling parameters, the electronic device may wait for reception of a BLE advertisement message or a WUR packet when a WUR communication module is in the "on" state, in operation S1915. The electronic device may determine whether a BLE advertisement message or a WUR packet is received, in operation S1920.

When the BLE advertisement message or WUR packet is received, the electronic device may determine a sleep state or a wake-up state of the electronic device based on an SeCR parameter ($\mathbf{Params}_{SeCR}$) included in the BLE advertisement message or the WUR packet, in operation S1925. The SeCR parameter ($\mathbf{Params}_{SeCR}$) may include operating channel information, SeCR channel information, WUR delay information, and SeCR duration information. For example, $\mathbf{Params}_{WUR}$ may be expressed as $\{CH_{OP}, CH_{SeCR}, delay_{WU}, duration_{SeCR}\}$. For example, $duration_{SeCR}$ may be determined to be $\min(l,n)$ or may be determined to be $2^{counter}$ * sleep unit time. Subsequently, the electronic device may change the counter value to a value smaller between an arbitrarily configured counter threshold value ($counter_{th}$) and a value calculated based on WUR duration information in operation S1930. For example, the counter value may be determined to be a value smaller between coun-

$ter_{th}$ and $\log_2 \left\lfloor \dfrac{duration_{SeCR}}{sleep\ unit\ time} \right\rfloor$ . Here, a sleep unit time may be configured in advance.

When a BLE advertisement message or a WUR packet is not received, the electronic device may adjust the SDP interval and the SW interval in order to receive a BLE advertisement message or a WUR packet. When a BLE advertisement message or a WUR packet is not received, the electronic device may increase a counter value by 1 in operation S1935. After increasing the counter value by 1, the electronic device may determine whether the current counter value is greater than the arbitrarily configured counter threshold value ($counter_{th}$) in operation S1940.

When the current counter value is less than or equal to the counter threshold value, the electronic device may perform adjustment to increase the SDP interval and the SW interval in operation S1945. Among the time parameters, the SDP interval value $l_{init}$) and the SW interval value ($n_{init}$) may be adjusted. The increased time parameter values may be denoted by $l_{inc}$ and $n_{inc}$. For example, $l_{inc}$ that is the increased SDP interval value may be determined to be $2^{counter}$ * sleep unit time. In addition, $n_{inc}$ that is the increased SW interval value may be determined to be $2^{counter}$ * sleep unit time.

When the current counter value is greater than the counter threshold value, the electronic device may perform adjustment to decrease the SDP interval and the SW interval in operation S1950. Among the time parameters, the SDP interval value $l_{init}$) and the SW interval value ($n_{init}$) may be adjusted. In this instance, this may be a method of resetting the SDP interval and the SW interval. The decreased time parameter values may be denoted by $l_{dec}$ and $n_{dec}$. For example, $l_{inc}$ that is the decreased SDP interval value may be determined to be a sleep unit time. In addition, $n_{inc}$ that is the decreased SW interval value may be determined to be a sleep unit time. After adjusting the time parameters, the electronic device may reset the counter value to 0 in operation S 1955.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, the respective embodiments of the disclosure may be at least partially combined with each other to operate a base station and a terminal.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. In addition, the embodiments of the disclosure as described above are merely for the sake of illustration, and those skilled in the art will appreciate that various changes and modifications may be made thereto and embodiments within equivalent ranges may be possible. Therefore, the true technical scope of protection of the disclosure shall be defined by the appended claims.

**Claims**

1. A method performed by a first electronic device in a wireless communication system, the method comprising:

    transmitting an advertisement message to at least one second electronic device;
    transmitting a wake-up packet to the at least one second electronic device;
    transmitting, based on the wake-up packet, a service discovery frame to the at least one second electronic device;

    transmitting a synchronization beacon to the at least one second electronic device; and
    performing communication with the at least one second electronic device.

2. The method of claim 1, wherein the wake-up packet comprises a wake-up related parameter, and wherein the wake-up related parameter comprises wake-up delay information, wake-up duration information, and channel information.

3. A method performed by a second electronic device in a wireless communication system, the method comprising:

    receiving an advertisement message from a first electronic device;
    receiving a wake-up packet from the first electronic device;
    changing, based on reception of the wake-up packet, a first communication module of the second electronic device to an ON state for data packet communication;
    receiving a service discovery frame from the first electronic device;
    transmitting a synchronization beacon from the first electronic device; and
    performing communication with the first electronic device.

4. The method of claim 3, wherein the wake-up packet comprises a wake-up related parameter, and wherein the wake-up related parameter comprises wake-up delay information, wake-up duration information, and channel information.

5. A first electronic device in a wireless communication system, the device comprising:

    a transceiver; and
    a controller,
    wherein the controller is configured to:

        perform control so as to transmit an advertisement message to at least one second electronic device;
        perform control so as to transmit a wake-up packet to the at least one second electronic device;
        perform control so as to transmit, based on the wake-up packet, a service discovery frame to the at least one second electronic device;
        perform control so as to transmit a synchronization beacon to the at least one second electronic device; and
        perform communication with the at least one second electronic device.

**EP 4 642 106 A1**

6. The device of claim 5, wherein the wake-up packet comprises a wake-up related parameter, and wherein the wake-up related parameter comprises wake-up delay information, wake-up duration information, and channel information.

7. A second electronic device in a wireless communication system, the device comprising:

   a transceiver; and
   a controller,
   wherein the controller is configured to perform control to:

   receive an advertisement message from a first electronic device;
   receive a wake-up packet from the first electronic device;
   change, based on reception of the wake-up packet, a first communication module of the second electronic device to an ON state for data packet communication;
   receive a service discovery frame from the first electronic device; and
   transmit a synchronization beacon from the first electronic device; and
   perform communication with the first electronic device.

8. The device of claim 7, wherein the wake-up packet comprises a wake-up related parameter, and wherein the wake-up related parameter comprises wake-up delay information, wake-up duration information, and channel information.

FIG. 1

ELECTRONIC DEVICE 101

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

BATTERY 189

PROCESSOR 120

MAIN PROCESSOR 121

AUXILIARY PROCESSOR 123

POWER MANAGEMENT MODULE 188

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

INTERFACE 177

CONNECTING TERMINAL 178

HAPTIC MODULE 179

CAMERA MODULE 180

PROGRAM 140

APPLICATION 146

MIDDLEWARE 144

OPERATING SYSTEM 142

SECOND NETWORK 199

ELECTRONIC DEVICE 104

FIRST NETWORK 198

ELECTRONIC DEVICE 102

SERVER 108

100

EP 4 642 106 A1

205b
205
Transmitter (e.g.,AP)

205a
802.11+ Module

Data packet

225

210c
210
Reciever (e.g.,STA)

210a
802.11 Module (PCR*)
OFF

Wake-up packet

220

Wake-up signal
210b
LP-WUR
ON

PCR*: Primary connectivity radio

# FIG. 2A

220
Wake-up packet

225
Data packet

205
Transmitter

210
210a
PCR

210b
WUR

Receiver

235
PCR on

230a
WUR on

230b
WUR on

Duty cycle period

240

Length of WUR "On" period
(WUR duty cycle service period)

245

# FIG. 2B

FIG. 3A

**300a** — Non- WUR Portion — 28 μs

**300b**

**330** WUR Preamble — 128 μs — 2 μs symbol

**335** WUR Data — 4 μs symbol

## FIG. 3B

**370** Information 1

370a — On  Off — 370b

2 μs
4 μs

**375** Information 0

375a — Off  On — 375b

2 μs
4 μs

## FIG. 3C

EP 4 642 106 A1

405

405c

NAN Tranceiver (A)

405a

OFF | 802.11+ Module (PCR*)

Data packet

425

405b

ON | LP-WUR

410c

410

NAN Tranceiver (B)

410a

802.11+ Module (PCR*) | OFF

Wake-up packet

420

Wake-up signal ~415

410b

LP-WUR | ON

FIG. 4A

405

405a

PCR

405b

WUR

NAN Device A

420

Wake-up packet

425

Data packet

410

410a

PCR

410b

WUR

NAN Device B

435

PCR on

415

430 WUR on

WUR on

Duty cycle period

440

Length of WUR "On" period
(WUR duty cycle service period)

445

FIG. 4B

FIG. 5

Time

610c

620c

650b

SW interval (n'-Tus) 675

SDP interval (I'-Tus) 685

620b

610b

SW interval (n-Tus) ~670

... 665

620a

SW (m-TUs) ~665

SDP interval (I-Tus) 680

610a

SDP (k-TUs) 660

620

Sync Window

610 (U)SD Period

650a

Sync beacons ~630 ----▶ Service discovery frames (SDFs) ~640

Wake-up packet (WUR) ~650

## FIG. 6

705                                          710

| Master |                          | Non-Master |

┌─────────────────────────────────────────────┐
│        Device / Service Discovery            │ ─ S705
└─────────────────────────────────────────────┘

Ch.149                                   Ch.149
                                              ─ S710
Sync beacons (w/scheduling info.)

Ch.1           Publish SDF               Ch.1
         Publish / Subscribe SDF              ─ S715

SDF follow-up (w/service specific,
next SW timing, channel info.)

Long Sleep period ─ S720
(NAN module "Off", WUR "On")

730
Event
(e.g., traffic          Wake-up packet [WUR]              735
generation)            (w/wake-up timing, channel info.)
                                                    Make NAN module "On"
                              S725                  through by wake-up signal

              Wake-up response
                                              ─ S740

Ch.36                                    Ch.36
                                              ─ S745
Sync beacons (w/scheduling info.)

## FIG. 7

800

| 805 | 810 | 815 |
|---|---|---|
| B0 MAC Header B31 | Frame Body | FCS |

Bits:  32  variable  16

## FIG. 8A

805

| B0    B7 | B8    B19 | B20    B31 |
|---|---|---|
| Frame Control | ID | Type Dependent Control |

Bits:  8 820  12 822  12 824

## FIG. 8B

820

| B0   B2 | B3 | B4 | B5   B7 |
|---|---|---|---|
| Type | Protected | Frame Body Present | Length/ Miscellaneous |

Bits:  3 831  1 832  1 833  3 834

## FIG. 8C

831

| Type | Type description |
|------|------------------|
| 0 | WUR Beacon |
| 1 | WUR Wake-up |
| 2 | WUR Vendor Specific |
| 3 | WUR Discovery |
| 4 | WUR Short Wake-up |
| 5-7 | Reserved |

840 — Type
845 — Type description

## FIG. 8D

850

| Wake-up delay (in TUs) | Wake-up duration (in TUs) | NAN Operating channel (after wake-up) | next WUR channel (when NAN Off) |
|------------------------|---------------------------|----------------------------------------|----------------------------------|

852 854 856 858

Octets:      2            2            1            1

## FIG. 8E

EP 4 642 106 A1

NAN/BLE module On — S905

Initial Setting for Discovery/Operating Ch. List & Time Parameters — S910

**Params** := {**Params**$_{ch}$, **Prams**$_{time}$}

**Params** = **Params**$_{init}$, counter =0

**Params**$_{init}$ := {**CH**$_{(dis,init)}$, **CH**$_{(op,init)}$, **CH**$_{(WUR,init)}$, $k_{init}$, $l_{init}$, $m_{init}$, $n_{init}$}

**CH**$_{(dis,init)}$ := {$ch_1$, $ch_6$, ...}, **CH**$_{(op,init)}$ := {$ch_6$, $ch_{44}$, ...}, **CH**$_{(WUR,init)}$ = {$ch_1$, $ch_6$}

Wating for receiving BLE Adv. message or WUR packet at WUR "ON" period — S915

Set counter : — S930

$$counter = min\left\{counter_{th}, log_2\left|\frac{duration_{WU}}{sleep\ unit\ time}\right|\right\}$$

S955 — Reset counter: counter = 0

Is there any BLE Adv. message or WUR packet? — S920

Yes → Wake-up and Sleep based on **Params**$_{WUR}$ — S925
**Params**$_{WUR}$ = {$CH_{op}$, $CH_{WUR}$, $delay_{WU}$, $duration_{WU}$}

No

counter++ — S935

S945 — Increase Interval Parameters:
**Params**$_{time}$ = {$k_{init}$, $l_{inc}$, $m_{init}$, $n_{inc}$}
$l_{inc} \leftarrow 2^{counter}$ *sleep unit time
$n_{inc} \leftarrow 2^{counter}$ *sleep unit time

No ← counter > counter$_{th}$ — S940

Yes

Decrese Intrerval Parameters (e.g., re-initialization): — S950
**Params**$_{time}$ = {$k_{init}$, $l_{dec}$, $m_{init}$, $n_{dec}$}
$l_{dec} \leftarrow$ sleep unit time
$n_{dec} \leftarrow$ sleep unit time

FIG. 9

1000

Electronic device

1010

Processor

1020

Transceiver

# FIG. 10

1100

Transceiver

1110

First communication module

1120

Second communication module

# FIG. 11

Application

OS/Framework

(2) BLE based discovery result report

Driver/Host

(3) Wi-Fi interface ramping-up

(1) BLE based discovery/messaging

BLE          Wi-Fi

(4) Wi-Fi discovery starting

BLE/WiFi combo chipset

(a)

Application

OS/Framework

Driver/Host

(1) BLE based discovery/messaging

BLE  →  Wi-Fi

BLE/WiFi combo chipset

(2) Wi-Fi interface ramping-up, discovery/data transmission starting, WuR messaging based time/frequency parameters adjustment

(b)

Application

OS/Framework

(1) WuR based discovery/messaging

Driver/Host

WUR  →  Wi-Fi

WuR supporting Wi-Fi chipset

(2) Wi-Fi interface ramping-up, discovery/data transmission starting, WuR messaging based time/frequency parameters adjustment

(c)

# FIG. 12

FIG. 13A

EP 4 642 106 A1

1305

1305a

PCR

1305b

BLE

Wi-Fi Aware
Device A

1320

BLE Adv. packet

1325

Data packet

1310

1310a

PCR

1310b

BLE

Wi-Fi Aware
Device B

1335

PCR on

1330

BLE Listen

BLE Listen

Wake-up procedure
(Between Upper/Down Layers)

Duty cycle period

1340

Length of BLE "On" period
(BLE duty cycle service period)

1345

# FIG. 13B

1405

1405c

Wi-Fi Aware Tranceiver (A)

1405a

OFF | 802.11 Module (PCR*)

Data packet

1425

Wake-up signal
(Combo 칩셋내 인터페이스)

1405b

ON | BLE

BLE Adv. packet

1420

1410c

1410

Wi-Fi Aware Tranceiver (A)

802.11 Module (PCR*) | OFF

1410a

Wake-up signal
(Interface in combo chipset)

BLE | ON

1410b

FIG. 14A

FIG. 14B

FIG. 15A

FIG. 15B

FIG. 16

1705                                              1710

| Master |                              | Non-Master |

Device/Service Discovery  ~ S1705

Ch.149                                            Ch.149
                                                          ~ S1710

Sync beacons (w/scheduling info.)

                    Publish SDF
Ch.1            Publish / Subscribe SDF           Ch.1
                                                          ~ S1715

SDF follow-up (w/service specific,
next SW timing, channel info.)

Long Sleep period ~ S1720
(NAN module PCR "Off", SeCR "On")

1730
Event
(e.g., traffic                                    1735
generation)
                BLE or WUR packet
                (w/wake-up timing, channel info.)
                                              Make NAN module PCR "On"
                                              through by wake-up signal
                        S1725

                    Wake-up response
                                                  ~ S1740

Ch.36                                             Ch.36
                                                          ~ S1745

Sync beacons (w/scheduling info.)

# FIG. 17

1810

1810a

PCR

1810b

SeCR

Secondary
Connectivity Radio
(BLE, WuR)

1830

1835

PCR on

SeCR on

Wake-up procedure

Duty cycle period

1840

SeCR on

Length of SeCR "On" period
(SeCR duty cycle service period)

1845

## FIG. 18A

831

| Type | Type description |
|------|------------------|
| 1840 | 1845 |
| Type | Type description |
| 0 | WUR Beacon |
| 1 | WUR Wake-up |
| 2 | WUR Vendor Specific |
| 3 | WUR Discovery |
| 4 | WUR Short Wake-up |
| 5-7 | Reserved |

## FIG. 18B

| Wake-up delay of PCR(in TUs) | Wake-up duration of PCR (in TUs) | Wake-up interval of PCR (in TUs) | Wake-up duration of SeCR (in TUs) | Wake-up interval of SeCR (in TUs) | PCR Operating channel (after wake-up) | Next SeCR channel (when PCR Off) |
|---|---|---|---|---|---|---|
| 2 Octets | 2 Octets | 2 Octets | 2 Octets | 2 Octets | 1 Octets | 1 Octets |

1852    1854    1856    1858    1860    1862    1864

1850

FIG. 18C

EP 4 642 106 A1

NAN/BLE module On — S1905

Initial Setting for Discovery/Operating Ch. List & Time Parameters — S1910

**Params** := {Params$_{ch}$ , Prams$_{time}$}

**Params** = Params$_{init}$ , counter =0

**Params**$_{init}$ := {**CH**$_{(dis,init)}$ ,**CH**$_{(op,init)}$ ,**CH**$_{(SeCR, init)}$ ,$k_{init}$ ,$l_{init}$ ,$m_{init}$ ,$n_{init}$ }

**CH**$_{(dis,init)}$ := {$ch_1$,$ch_6$, ...} ,**CH**$_{(op,init)}$ := {$ch_6$,$ch_{44}$ , ...} ,**CH**$_{(SeCR,init)}$ = {$ch_1$,$ch_6$}

Wating for receiving BLE Adv. message or WUR packet at WUR "ON" period — S1915

Set counter : — S1930

$$counter = min\left\{counter_{th} ,log_2 \left| \frac{duration_{SeCR}}{sleep\ unit\ time} \right| \right\}$$

Reset counter: counter = 0 — S1955

Is there any BLE Adv. message or WUR packet? — S1920

Yes

Wake-up and Sleep based on **Params**$_{SeCR}$ — S1925

**Params**$_{SeCR}$= {$CH_{op}$,$CH_{SeCR}$,$delay_{WU}$ , $duration_{SeCR}$}

Increase Interval Parameters: — S1945

**Params**$_{time}$ ={$k_{init}$ , $l_{inc}$ , $m_{init}$ , $n_{inc}$ }

$l_{inc}$ ← $2^{counter}$ *sleep unit time

$n_{inc}$ ← $2^{counter}$ *sleep unit time

No

counter++ — S1935

No

counter > counter$_{th}$ — S1940

counter$_{th}$ : pre-defined threshold of counter

Yes

Decrese Intrerval Parameters (e.g., re-initialization): — S1950

**Params**$_{time}$ ={$k_{init}$ , $l_{dec}$, $m_{init}$ , $n_{dec}$}

$l_{dec}$← sleep unit time

$n_{dec}$← sleep unit time

## FIG. 19

## INTERNATIONAL SEARCH REPORT

International application No.

**PCT/KR2024/000638**

### A. CLASSIFICATION OF SUBJECT MATTER

**H04W 52/02**(2009.01)i; **H04W 56/00**(2009.01)i; **H04W 8/00**(2009.01)i; **H04L 67/51**(2022.01)i; **H04W 4/06**(2009.01)i; **H04W 4/80**(2018.01)i; **H04W 84/12**(2009.01)i

According to International Patent Classification (IPC) or to both national classification and IPC

### B. FIELDS SEARCHED

Minimum documentation searched (classification system followed by classification symbols)

H04W 52/02(2009.01); H04W 4/80(2018.01); H04W 48/16(2009.01); H04W 56/00(2009.01); H04W 74/08(2009.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광고(advertisement), 메시지(message), 웨이크 업(wake-up), 패킷(packet), 탐색 (discovery), 프레임(frame), 비콘(beacon)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0097544 A (SAMSUNG ELECTRONICS CO., LTD.) 09 August 2021 (2021-08-09) <br> See paragraphs [0012], [0056]-[0057], [0091] and [0096]; and figures 1, 4 and 7. | 1-8 |
| Y | KR 10-2021-0100584 A (ELECTRONICS AND TELECOMMUNICATIONS RESEARCH INSTITUTE et al.) 17 August 2021 (2021-08-17) <br> See paragraphs [0010], [0019] and [0024]. | 1-8 |
| A | US 10117162 B2 (INTEL CORPORATION) 30 October 2018 (2018-10-30) <br> See column 2, line 62 - column 5, line 8; claims 1-6; and figures 1A-1B. | 1-8 |
| A | JP 2021-508203 A (PANASONIC INTELLECTUAL PROPERTY CORPORATION OF AMERICA) 25 February 2021 (2021-02-25) <br> See paragraphs [0007]-[0008]; and claims 1-10. | 1-8 |
| A | KR 10-2021-0080937 A (SAMSUNG ELECTRONICS CO., LTD.) 01 July 2021 (2021-07-01) <br> See paragraphs [0008]-[0010]; and claims 1-10. | 1-8 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **12 April 2024** | **12 April 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000638**

| Patent document cited in search report | | | Publication date (day/month/year) | Patent family member(s) | | | Publication date (day/month/year) |
|---|---|---|---|---|---|---|---|
| KR | 10-2021-0097544 | A | 09 August 2021 | US | 2022-0361095 | A1 | 10 November 2022 |
| | | | | WO | 2021-153896 | A1 | 05 August 2021 |
| KR | 10-2021-0100584 | A | 17 August 2021 | CN | 109863811 | A | 07 June 2019 |
| | | | | CN | 109863811 | B | 23 May 2023 |
| | | | | CN | 116456438 | A | 18 July 2023 |
| | | | | EP | 3506712 | A1 | 03 July 2019 |
| | | | | EP | 3506712 | B1 | 30 June 2021 |
| | | | | EP | 3923666 | A1 | 15 December 2021 |
| | | | | KR | 10-2018-0022612 | A | 06 March 2018 |
| | | | | KR | 10-2293670 | B1 | 26 August 2021 |
| | | | | US | 10897739 | B2 | 19 January 2021 |
| | | | | US | 11553426 | B2 | 10 January 2023 |
| | | | | US | 2019-0191376 | A1 | 20 June 2019 |
| | | | | US | 2021-0092678 | A1 | 25 March 2021 |
| | | | | WO | 2018-038532 | A1 | 01 March 2018 |
| US | 10117162 | B2 | 30 October 2018 | US | 11109306 | B2 | 31 August 2021 |
| | | | | US | 2015-0319675 | A1 | 05 November 2015 |
| | | | | US | 2017-0127342 | A1 | 04 May 2017 |
| | | | | US | 2019-0174400 | A1 | 06 June 2019 |
| | | | | US | 9386512 | B2 | 05 July 2016 |
| JP | 2021-508203 | A | 25 February 2021 | CN | 111480371 | A | 31 July 2020 |
| | | | | CN | 111480371 | B | 03 November 2023 |
| | | | | EP | 3732923 | A1 | 04 November 2020 |
| | | | | EP | 3732923 | B1 | 27 September 2023 |
| | | | | JP | 7246394 | B2 | 27 March 2023 |
| | | | | TW | 201931943 | A | 01 August 2019 |
| | | | | TW | I791077 | B | 01 February 2023 |
| | | | | US | 11206607 | B2 | 21 December 2021 |
| | | | | US | 2021-0185597 | A1 | 17 June 2021 |
| | | | | WO | 2019-131548 | A1 | 04 July 2019 |
| KR | 10-2021-0080937 | A | 01 July 2021 | WO | 2021-132940 | A1 | 01 July 2021 |

Form PCT/ISA/210 (patent family annex) (July 2022)